# EUROPÄISCHE PATENTSCHRIFT

(11) **EP 4 388 838 B1**
(45) Veröffentlichungstag und Bekanntmachung des Hinweises auf die Patenterteilung: **22.07.2026**
(21) Anmeldenummer: 23217603.2
(22) Anmeldetag: 18.12.2023
(51) Int. Cl.: A01B 19/02, A01B 23/02

(54) **LANDWIRTSCHAFTLICHE BODENBEARBEITUNGSMASCHINE**
AGRICULTURAL SOIL WORKING MACHINE
MACHINE AGRICOLE DE TRAVAIL DU SOL

(30) Priorität: 19.12.2022 DE 102022133837
(43) Veröffentlichungstag der Anmeldung: 26.06.2024
(73) Patentinhaber: Horsch Maschinen SE & Co. KG, 92421 Schwandorf (DE)
(72) Erfinder: HORSCH, Philipp, 92421 Schwandorf (DE)
(74) Vertreter: v. Bezold & Partner Patentanwälte - PartG mbB

(56) Entgegenhaltungen:
- EP-A1- 3 387 890
- EP-A1- 3 659 412
- DE-A1- 102005 005 939
- DE-A1- 102019 108 987
- DE-A1- 102021 108 227
- DE-U1- 9 210 389
- US-A- 4 304 306
- US-A1- 2017 127 602

## Beschreibung

Die Erfindung betrifft eine insbesondere landwirtschaftliche Bodenbearbeitungsmaschine.

Bodenbearbeitungsmaschinen können zum Lockern des Ackerbodens eingesetzt werden. Zum Lockern des Ackerbodens können hierfür sogenannte Zinken mit daran angebrachten Scharen vorgesehen sein. Herkömmlich sind alle Zinken einer Bodenauflockerungsvorrichtung identisch ausgeführt.

Die DE 92 10 389 U1 bezieht sich auf einen Grubber bzw. auf ein Bodenbearbeitungsgerät mit Zinkeneinrichtungen, Hohlscheiben-Zustreichern und einer Walze. Der Grubber ist als einbalkiger mehrreihiger Kurzgrubber mit drei vorderen und drei hinteren Zinken ausgebildet. Die vorderen und hinteren Zinken sind gleich ausgebildet. Die vorderen Zinken sind jeweils fest mit einem Rahmenträgerblech verbunden, das nach vorne von einem Rahmenquerbalken absteht. Die hinteren Zinken sind jeweils fest mit einem Rahmenträgerblech verbunden, das nach hinten von dem Rahmenquerbalken absteht.

Die DE 10 2005 005 939 A1 offenbart ein landwirtschaftliches Gerät mit einem Rahmen, an dem in mehreren mit Abstand zueinander und hintereinanderliegenden Querreihen Bodenbearbeitungswerkzeuge an Querbalken beabstandet zueinander und versetzt zueinander angeordnet sind. Die Querbalken sind durchgekröpft ausgebildet. Die Bodenbearbeitungswerkzeuge sind an den Durchkröpfungsscheitelbereichen angeordnet.

Die DE 10 2021 108 227 A1 offenbart bereits eine demgegenüber verbesserte Bodenbearbeitungsmaschine.

Der Erfindung liegt die Aufgabe zu Grunde, eine gegenüber insbesondere der DE 10 2021 108 227 A1 alternative, vorzugsweise kompaktere und/oder konstruktiv einfache Bodenbearbeitungsmaschine zu schaffen.

Die Aufgabe wird gelöst durch die Merkmale des unabhängigen Anspruchs. Vorteilhafte Weiterbildungen sind in den abhängigen Ansprüchen und der Beschreibung angegeben.

Die Erfindung betrifft eine landwirtschaftliche Bodenbearbeitungsmaschine nach Anspruch 1.

Die Bodenbearbeitungsmaschine umfasst einen Rahmen, wobei der Rahmen einen ersten Querträger und einen zweiten Querträger umfasst, die z. B. durch zumindest einen Längsträger miteinander verbunden sein können.

Der erste Querträger ist zweckmäßig bezüglich der Arbeitsrichtung vor dem zweiten Querträger angeordnet. Der erste Querträger kann somit z. B. ein vorderer Querträger sein und der zweite Querträger kann z. B. ein hinterer Querträger sein.

Z. B. können der erste Querträger und der zweite Querträger seitlich außen über jeweils einen (sich vorzugsweise im Wesentlichen parallel oder schräg zur Arbeitsrichtung erstreckenden) Längsträger miteinander verbunden sein, wobei es alternativ oder ergänzend möglich ist, dass z. B. ein Längsträger den ersten Querträger und den zweiten Querträger mittig miteinander verbindet.

Die Bodenbearbeitungsmaschine umfasst eine Bodenauflockerungsvorrichtung mit mehreren ersten Zinkeneinrichtungen und mehreren zweiten Zinkeneinrichtungen. Der Rahmen bildet vorzugsweise den Tragrahmen der Bodenauflockerungsvorrichtung.

Erfindungsgemäss sind am ersten Querträger mehrere der ersten Zinkeneinrichtungen und mehrere der zweiten Zinkeneinrichtungen, vorzugsweise schwenkbar, angebracht .

Die ersten Zinkeneinrichtungen und die zweiten Zinkeneinrichtungen können (zweckmäßig in Längsrichtung des ersten Querträgers) z. B. abwechselnd nebeneinander am ersten Querträger verteilt angeordnet sein.

Es sind am zweiten Querträger z. B. mehrere der ersten Zinkeneinrichtungen und/oder mehrere der zweiten Zinkeneinrichtungen, vorzugsweise schwenkbar, angebracht .

Die ersten Zinkeneinrichtungen und die zweiten Zinkeneinrichtungen können (zweckmäßig in Längsrichtung des zweiten Querträgers) z. B. abwechselnd nebeneinander am zweiten Querträger verteilt angeordnet sein.

Die mehreren ersten Zinkeneinrichtungen sind zweckmäßig bezüglich der Arbeitsrichtung vorzugsweise länger als die mehreren zweiten Zinkeneinrichtungen. Somit können vorteilhaft am ersten Querträger und/oder am zweiten Querträger die ersten Zinkeneinrichtungen (zweckmäßig bezüglich der Arbeitsrichtung) weiter nach hinten abstehen als die zweiten Zinkeneinrichtungen.

Die Bodenbearbeitungsmaschine, insbesondere die Bodenauflockerungsvorrichtung, weist eine maximale Arbeitsbreite von kleiner oder gleich 6m, 5m, 4m oder 3m auf. Ausserdem weist die Bodenbearbeitungsmaschin eine 3-Punkt-Anhängevorrichtung zum Anhängen (z. B. Ankoppeln) an ein Zugfahrzeug (z. B. ein Traktor etc.) auf.

Die Bodenbearbeitungsmaschine kann somit vorzugsweise als Dreipunktmaschine ausgebildet sein.

Die Erfindung ermöglicht insbesondere, dass der erste Querträger und der zweite Querträger mit den ersten Zinkeneinrichtungen und den zweiten Zinkeneinrichtungen eine (z. B. zweibalkige) Bodenauflockerungsvorrichtung mit zweckmäßig zwei (vorzugsweise durch den ersten Querbalken und den zweiten Querbalken gebildete) Querträgerreihen, aber mit zumindest drei oder zumindest vier (vorzugsweise mittels den ersten Zinkeneinrichtungen und den zweiten Zinkeneinrichtungen gebildeten) Zinkenquerreihen bilden.

Somit kann vorzugsweise die Bodenauflockerungsvorrichtung und/oder der Rahmen z. B. nur den ersten Querträger und den zweiten Querträger als Querträgerstruktur zum Tragen der ersten Zinkeneinrichtungen und der zweiten Zinkeneinrichtungen umfassen, vorteilhaft aber zumindest drei oder zumindest vier Zinkenquerreihen.

Vorteilhaft kann die Bodenauflockerungsvorrichtung somit mehr, z. B. zumindest doppelt so viele, Zinkenquerreihen als Querträger zum Tragen der ersten und zweiten Zinkeneinrichtungen umfassen.

Die Bodenauflockerungsvorrichtung kann z. B. den Rahmen mit dem ersten Querträger und dem zweiten Querträger und die ersten Zinkeneinrichtungen und die zweiten Zinkeneinrichtungen umfassen.

Es ist möglich, dass zumindest zwei dem zweiten (und somit zweckmäßig hinteren) Querträger zugeordnete Zinkenquerreihen in Arbeitsrichtung hinter dem zweiten Querträger ausgebildet sind.

Es ist möglich, dass die am ersten Querträger angebrachten ersten Zinkeneinrichtungen und zweiten Zinkeneinrichtungen in Arbeitsrichtung vor dem zweiten Querträger angeordnet sind.

Es ist möglich, dass in Arbeitsrichtung hinter dem zweiten Querträger die Bodenbearbeitungsmaschine keinen weiteren Querträger mit Zinkeneinrichtung umfasst.

Es ist möglich, dass die Bodenauflockerungsvorrichtung und/oder der Rahmen als Querträgerstrukturen (insbesondere zum Tragen der ersten Zinkeneinrichtungen und der zweiten Zinkeneinrichtungen) nur zwei Querträger, nämlich insbesondere den ersten Querträger und den zweiten Querträger, und/oder nur zwei Querträgerreihen umfasst, aber vorzugsweise zumindest drei oder zumindest vier Zinkenquerreihen umfasst, z. B. zumindest doppelt so viele Zinkenquerreihen wie Querträger.

Die Bodenbearbeitungsmaschine kann z. B. Stützrad-frei und/oder Fahrwerksrad-frei und somit insbesondere ohne Stützrad und/oder ohne Fahrwerksrad zum Abstützen der Bodenbearbeitungsmaschine ausgeführt sein.

Die Bodenauflockerungsvorrichtung kann mittels der ersten Zinkeneinrichtungen und der zweiten Zinkeneinrichtungen insbesondere ausgebildet sein, um einen (zweckmäßig im Wesentlichen gleichmäßigen) Strichabstand von kleiner oder gleich 30cm, 29cm, 28cm, 27cm, 26cm oder 25cm zu erzeugen.

Die Bodenauflockerungsvorrichtung kann mittels der ersten Zinkeneinrichtungen und der zweiten Zinkeneinrichtungen z. B. einen Strichabstand (z. B. 30cm) erzeugen, wobei die ersten Zinkeneinrichtungen und die zweiten Zinkeneinrichtungen am ersten Querträger und/oder am zweiten Querträger mit einem z. B. (zweckmäßig im Wesentlichen) zumindest doppelten Strichabstand (z. B. 60cm), dem maximal dreifachen und/oder dem maximal vierfachen Strichabstand voneinander beabstandet sein können.

Es ist möglich, dass am ersten Querträger die ersten Zinkeneinrichtungen und die zweiten Zinkeneinrichtungen (insbesondere relativ zur Längsachse der Bodenbearbeitungsmaschine) z. B. symmetrisch oder asymmetrisch verteilt angeordnet sind. Alternativ oder ergänzend kann am ersten Querträger z. B. eine Summe aus den ersten Zinkeneinrichtungen und den zweiten Zinkeneinrichtungen eine ungerade oder gerade Zahl bilden.

Es ist möglich, dass am zweiten Querträger die ersten Zinkeneinrichtungen und die zweiten Zinkeneinrichtungen (insbesondere relativ zur Längsachse der Bodenbearbeitungsmaschine) z. B. symmetrisch oder asymmetrisch verteilt angeordnet sein. Alternativ oder ergänzend kann am zweiten Querträger z. B. eine Summe aus den ersten Zinkeneinrichtungen und den zweiten Zinkeneinrichtungen eine ungerade oder gerade Zahl bilden.

Es ist möglich, dass am ersten Querträger z. B. exakt drei erste Zinkeneinrichtungen und z. B. exakt drei zweite Zinkeneinrichtungen angebracht sind, wobei vorzugsweise am zweiten Querträger z. B. exakt vier erste Zinkeneinrichtungen und zweckmäßig exakt drei zweite Zinkeneinrichtungen angebracht sind.

Es ist möglich, dass am ersten Querträger z. B. exakt zwei erste Zinkeneinrichtungen und z. B. exakt drei zweite Zinkeneinrichtungen angebracht sind, wobei vorzugsweise am zweiten Querträger z. B. exakt drei erste Zinkeneinrichtungen und zweckmäßig exakt drei zweite Zinkeneinrichtungen angebracht sind.

Der erste Querträger kann sich z. B. von der einen (zweckmäßig seitlich äußersten) Außenseite des Rahmens und/oder der Bodenauflockerungsvorrichtung bis zu der anderen (zweckmäßig seitlich äußersten) Außenseite des Rahmens und/oder der Bodenauflockerungsvorrichtung insbesondere durchgängig (z. B. geradlinig) erstrecken, vorzugsweise so, dass er über seine gesamte Längserstreckung eine durchgängige Tragstruktur bilden kann. Der erste Querträger kann dabei z. B. die Längsachse der Bodenbearbeitungsmaschine überspannen.

Der zweite Querträger kann sich z. B. von der einen (zweckmäßig seitlich äußersten) Außenseite des Rahmens und/oder der Bodenauflockerungsvorrichtung bis zu der anderen (zweckmäßig seitlich äußersten) Außenseite des Rahmens und/oder der Bodenauflockerungsvorrichtung insbesondere durchgängig (z. B. geradlinig) erstrecken, vorzugsweise so, dass er über seine gesamte Längserstreckung eine durchgängige Tragstruktur bilden kann. Der zweite Querträger kann dabei z. B. die Längsachse der Bodenbearbeitungsmaschine überspannen.

Der erste Querträger und der zweite Querträger erstrecken sich vorzugsweise parallel zueinander.

Der Rahmen kann z. B. einen in seiner Umfangsrichtung geschlossenen Rahmen bilden, z. B. um eine in Umfangsrichtung geschlossene Tragstruktur bilden zu können.

Es ist möglich, dass am ersten Querträger eine Summe aus ersten und zweiten Zinkeneinrichtungen angebracht ist (z. B. 6 oder 5) und am zweiten Querträger eine Summe aus ersten und zweiten Zinkeneinrichtungen angebracht ist (z. B. 7 oder 6) und die Summe am ersten Querträger kleiner ist als die Summe am zweiten Querträger.

Der erste Querträger kann bezüglich der Arbeitsrichtung z. B. vor dem zweiten Querträger angeordnet sein.

Der erste Querträger und der zweite Querträger können zweckmäßig bezüglich der Arbeitsrichtung mit einem Abstand voneinander beabstandet sein, wobei der Abstand z. B. größer sein kann als 500mm, 550mm, 600mm, 650mm, 700mm, 750mm oder 800mm.

Die Bodenbearbeitungsmaschine, z. B. die Bodenauflockerungsvorrichtung, kann eine maximale Arbeitsbreite von z. B. kleiner oder gleich 6m, 5m, 4m oder 3m aufweisen.

Es ist möglich, dass am ersten Querträger und/oder am zweiten Querträger mehrere dritte Zinkeneinrichtungen, vorzugsweise schwenkbar, angebracht sind und vorzugsweise die mehreren dritten Zinkeneinrichtungen bezüglich der Arbeitsrichtung länger sind als die mehreren ersten Zinkeneinrichtungen. Es ist auch möglich, dass am ersten Querträger und/oder am zweiten Querträger mehrere vierte Zinkeneinrichtungen, vorzugsweise schwenkbar, angebracht sind und vorzugsweise die mehreren vierten Zinkeneinrichtungen bezüglich der Arbeitsrichtung länger sind als die mehreren dritten Zinkeneinrichtungen, usw..

Die dritten, vierten und/oder fünften usw. Zinkeneinrichtungen können zweckmäßig mit Ausnahme deren Länge insbesondere wie die ersten Zinkeneinrichtungen ausgebildet sein.

Die ersten Zinkeneinrichtungen und/oder die zweiten Zinkeneinrichtungen können z. B. wie in der DE 10 2021 108 227 A1 offenbart ausgeführt sein.

So ist es z. B. möglich, dass die ersten Zinkeneinrichtungen jeweils aufweisen: einen Befestigungsbereich zum, insbesondere lösbaren, Anbringen an dem ersten Querträger und/oder an dem zweiten Querträger, wobei der Befestigungsbereich einen Kontaktabschnitt zum Anlegen an dem ersten Querträger und/oder dem zweiten Querträger aufweist (z. B. direktes Anlegen an den ersten und/oder zweiten Querträger oder direktes Anlegen an einer Abschersicherung des Rahmens); einen, vorzugsweise hakenförmigen und/oder stabförmigen (z. B. Mehrkantstab, vorzugsweise Vierkantstab), Zinkenstiel; und/oder ein Schar zum Eingreifen in den Boden, das an einem bodenseitigen Ende des Zinkenstiels angeordnet ist. Dabei ist es z. B. möglich, dass eine Länge der ersten Zinkeneinrichtung gemessen bezüglich der Arbeitsrichtung ausgehend von einem hintersten Ende des Kontaktabschnitts bis zu einem hintersten Ende des Zinkenstiels größer oder (zweckmäßig im Wesentlichen) gleich einer Höhe der ersten Zinkeneinrichtung gemessen bezüglich einer Hochachse der ersten Zinkeneinrichtung ausgehend von einem untersten Ende des Kontaktabschnitts bis zu einem untersten Ende des Schars ist.

Vorzugsweise bezieht sich der hierin verwendete Begriff "Zinkeneinrichtung" auf jene Einrichtung mit Zinken, die z. B. lösbar bzw. zerstörungsfrei abnehmbar vom Rahmen ausgebildet sein kann. Andererseits bezieht sich der Begriff "Rahmen" vorzugweise auf den Rahmen im engeren Sinne (also bspw. Längsträger und Querträger) und zusätzlich auf Elemente, die z. B. integral-einstückig mit dem Rahmen im engeren Sinne verbunden bzw. ausgebildet sind, wie bspw. ein angeschweißtes Blech oder eine angeschweißte Abschersicherung.

Vorzugsweise kann der Befestigungsbereich dazu ausgebildet sein, die Zinkeneinrichtung an einem Träger, vorzugsweise Querträger, des Rahmens der Bodenbearbeitungsmaschinen vorzugsweise lösbar anzubringen.

Bevorzugt können der Befestigungsbereich und der Zinkenstiel z. B. separat voneinander bzw. als separat vorgesehene Bauteile ausgeführt sein. Alternativ können der Befestigungsbereich und der Zinkenstiel integral-einstückig miteinander ausgebildet bzw. verbunden sein.

Beispielsweise kann der Zinkenstiel und das Schar integral-einstückig miteinander ausgebildet sein. Alternativ kann das Schar lösbar an dem Zinkenstiel befestigt sein, z. B. mittels einer Verschraubung.

In einem Ausführungsbeispiel ist die Länge kleiner oder gleich dem Zweifachen der Höhe.

In einem weiteren Ausführungsbeispiel ist die Länge größer oder im Wesentlichen gleich 700 mm, 800 mm, 900 mm oder 1000 mm. Alternativ oder zusätzlich kann die Länge kleiner 1300 mm, 1200 mm oder 1100 mm sein. Alternativ oder zusätzlich kann die Höhe größer oder im Wesentlichen gleich 600 mm, 700 mm, 800 mm oder 850 mm sein. Alternativ oder zusätzlich kann die Höhe kleiner 1100 mm, 1000 mm oder 900 mm sein.

In einem weiteren Ausführungsbeispiel ist eine Gesamtlänge der ersten Zinkeneinrichtung bezüglich der Arbeitsrichtung größer oder im Wesentlichen gleich einer Gesamthöhe der ersten Zinkeneinrichtung. Alternativ oder zusätzlich kann eine Gesamtlänge des Zinkenstiels bezüglich der Arbeitsrichtung größer oder im Wesentlich gleich einer Gesamthöhe der Zinkenstiels sein.

In einem weiteren Ausführungsbeispiel ist der Zinkenstiel schwenkbar mit dem Befestigungsbereich verbunden (z. B. mittels einer Schwenkachse, eines Drehbolzens oder eines Drehzapfens).

In einem weiteren Ausführungsbeispiel ist der Zinkenstiel mindestens zweiteilig, mit einem vorzugsweise im Wesentlichen geradlinigen Stielteil, das bevorzugt schwenkbar mit dem Befestigungsbereich verbunden ist (z. B. mittels einer Schwenkachse, eines Drehbolzens oder eines Drehzapfens), und einem hakenförmigen Stielteil, das vorzugsweise das bodenseitige Ende aufweist. Damit kann bspw. auf konstruktiv einfache Weise ein vergleichsweise langer Zinkenstiel und damit eine vergleichsweise lange erste Zinkeneinrichtung ermöglicht werden. Ebenso kann damit eine Gleichteilstrategie ermöglicht werden, wobei das hakenförmige Stielteil sowohl bei der zweckmäßig langen ersten Zinkeneinrichtung als auch bei einer zweckmäßig kurzen zweiten Zinkeneinrichtung eingesetzt werden kann.

Beispielsweise können das im Wesentlichen geradlinige Stielteil und das hakenförmige Stielteil direkt aneinander befestigt sein und/oder mittels des mindestens einen Schwenkarms und/oder mittels des mindestens einen Versteifungselements aneinander befestigt sein.

In einem Ausführungsbeispiel weist die erste Zinkeneinrichtung eine (z. B. vom Zinkenstiel separate) Vorspanneinrichtung auf, die den Zinkenstiel in einer Richtung zu dem Boden elastisch vorspannt. Vorzugsweise kann ein vorderes Ende des Schars bezüglich der Arbeitsrichtung hinter einem hinteren Ende der Vorspanneinrichtung oder bezüglich der Arbeitsrichtung auf im Wesentlichen gleicher Position bzw. gleicher Höhe wie ein hinteres Ende der Vorspanneinrichtung angeordnet sein. Alternativ oder zusätzlich kann die Länge der ersten Zinkeneinrichtung mindestens 25 %, mindestens 50 % oder mindestens 100 % größer als eine Gesamtlänge der Vorspanneinrichtung bezüglich der Arbeitsrichtung sein.

Vorzugsweise kann die Gesamtlänge des Zinkenstiels mindestens 25%, mindestens 50 % oder mindestens 100 % größer als eine Gesamtlänge der Vorspanneinrichtung bezüglich der Arbeitsrichtung sein.

Vorzugsweise kann die Vorspanneinrichtung oberhalb von dem Zinkenstiel angeordnet sein. Beispielsweise kann die Vorspanneinrichtung einen Fluidzylinder oder eine Feder, vorzugsweise Schraubenfeder, aufweisen. Beispielsweise kann die Vorspanneinrichtung schwenkbar an dem Befestigungsbereich gelagert sein (z. B. mittels eines Drehbolzens oder eines Drehzapfens). Optional kann die Vorspanneinrichtung schwenkbar mit dem Zinkenstiel verbunden sein (z. B. mittels eines Drehbolzens oder eines Drehzapfens und/oder mindestens einen Schwenkarms und/oder mittels eines Gelenks).

Eine Längsachse der Vorspanneinrichtung kann bspw. horizontal, vertikal oder angeschrägt zur Horizontalen und Vertikalen ausgerichtet sein.

In einem weiteren Ausführungsbeispiel weist die erste Zinkeneinrichtung ferner mindestens einen Schwenkarm auf, der schwenkbar mit dem Befestigungsbereich und/oder schwenkbar mit der Vorspanneinrichtung verbunden ist, und an dem Zinkenstiel befestigt ist, wobei der Zinkenstiel vorzugsweise zwischen zwei Schwenkarmen geklemmt ist. Der Schwenkarm kann die Konstruktion vorzugsweise stabilisieren und eine längere Einsatzzeit ermöglichen.

Beispielsweise kann der mindestens eine Schwenkarm ein Gussteil oder ein Schmiedeteil sein.

Es ist möglich, dass kein Schwenkarm umfasst ist. Der Zinkenstiel kann schwenkbar mit dem Befestigungsbereich verbunden sein, z. B. mit einem Drehzapfen oder einem Drehbolzen.

Es ist auch möglich, dass die erste Zinkeneinrichtung ferner mindestens ein Versteifungselement, vorzugsweise Versteifungsblech, aufweist, wobei das mindestens eine Versteifungselement den Zinkenstiel (und z. B. den mindestens einen Schwenkarm) versteift, vorzugsweise in einem Abschnitt des Zinkenstiels angrenzend an den Befestigungsbereich und z. B. unterhalb von der Vorspanneinrichtung. Das Versteifungselement kann die Konstruktion vorzugsweise stabilisieren und eine längere Einsatzzeit ermöglichen.

In einer Ausführungsform ist die Länge der ersten Zinkeneinrichtung bezüglich der Arbeitsrichtung verstellbar, vorzugsweise mittels einer Lochplattenverbindung (z. B. zwischen dem mindestens einen Schwenkarm und dem Zinkenstiel). Damit kann die erste Zinkeneinrichtung für unterschiedliche Einsatzzwecke und Anordnungen angepasst werden, z. B. als kurze, zweckmäßig zweite Zinkeneinrichtung oder als lange, zweckmäßig erste Zinkeneinrichtung.

Es ist möglich, dass die Vorspanneinrichtung in Abhängigkeit von der Länge aus einer Gruppe von unterschiedlichen und/oder unterschiedlichen langen Vorspanneinrichtungen ausgewählt wird.

In einer weiteren Ausführungsform ist der Befestigungsbereich dazu ausgebildet, die erste Zinkeneinrichtung lösbar an einer Abschersicherung des Rahmens anzubringen, insbesondere am ersten Querträger und/oder zweiten Querträger. Alternativ kann der Befestigungsbereich bspw. als eine, vorzugsweise mehrteilige, Halterung ausgeführt sein, die zum (z. B. vierseitigen) Klemmen und/oder Schrauben an den Rahmen, insbesondere den ersten Querträger und/oder zweiten Querträger, ausgebildet ist.

Es versteht sich, dass die ersten Zinkeneinrichtungen jeweils wie zuvor erörtert zweckmäßig ausgebildet sein können.

Wie schon erwähnt, sind die ersten Zinkeneinrichtungen zweckmäßig bezüglich der Arbeitsrichtung länger als die zweiten Zinkeneinrichtungen, z. B. um mindestens 20%, 30 %, 50 %, 80% oder 100 %.

Beispielsweise können die zweiten Zinkeneinrichtungen jeweils wie folgt ausgebildet sein. Bevorzugt kann die zweite Zinkeneinrichtung einen Befestigungsbereich zum lösbaren Anbringen der zweiten Zinkeneinrichtung an dem Rahmen (z. B. dem ersten Querträger und/oder dem zweiten Querträger) aufweisen, wobei der Befestigungsbereich einen Kontaktabschnitt zum Anlegen an dem Rahmen (z. B. dem ersten Querträger und/oder dem zweiten Querträger) aufweist (z. B.: direktes Anlegen an dem ersten Querträger und/oder dem zweiten Querträger oder direktes Anlegen an einer Abschersicherung des Rahmens (z. B. dem ersten Querträger und/oder dem zweiten Querträger)). Die zweite Zinkeneinrichtung kann bspw. einen, vorzugsweise hakenförmigen und/oder stabförmigen (z. B. Mehrkantstab, vorzugsweise Vierkantstab), Zinkenstiel aufweisen. Die zweite Zinkeneinrichtung kann bevorzugt ein Schar zum Eingreifen in den Boden, das an einem bodenseitigen Ende des Zinkenstiels angeordnet ist, aufweisen. Vorzugsweise kann eine Länge der zweiten Zinkeneinrichtung gemessen bezüglich der Arbeitsrichtung ausgehend von einem hintersten Ende des Kontaktabschnitts des Befestigungsbereichs der zweiten Zinkeneinrichtung bis zu einem hintersten Ende des Zinkenstiels der zweiten Zinkeneinrichtung größer, kleiner oder im Wesentlichen gleich einer Höhe der zweiten Zinkeneinrichtung gemessen bezüglich einer Hochachse der zweiten Zinkeneinrichtung ausgehend von einem untersten Ende des Kontaktabschnitts des Befestigungsbereichs der zweiten Zinkeneinrichtung bis zu einem untersten Ende des Schars der zweiten Zinkeneinrichtung sein.

Die längere Ausführung der ersten Zinkeneinrichtungen gegenüber den zweiten Zinkeneinrichtungen kann z. B. durch unterschiedliche, miteinander kombinierbare konstruktive Maßnahmen erreicht werden.

In einem Ausführungsbeispiel weisen die mehreren ersten Zinkeneinrichtungen und die mehreren zweiten Zinkeneinrichtungen jeweils einen Zinkenstiel auf, wobei die mehreren Zinkenstiele der mehreren ersten Zinkeneinrichtungen bezüglich der Arbeitsrichtung jeweils länger sein können als die mehreren Zinkenstiele der mehreren zweiten Zinkeneinrichtungen, vorzugsweise um mindestens 20 %, 30 %, 50 %, 80% oder 100 %.

In einem Ausführungsbeispiel weisen die mehreren ersten Zinkeneinrichtungen und die mehreren zweiten Zinkeneinrichtungen jeweils mindestens einen Schwenkarm auf, und die mehreren Schwenkarme der mehreren ersten Zinkeneinrichtungen sind bezüglich der Arbeitsrichtung jeweils länger als die mehreren Schwenkarme der zweiten Zinkeneinrichtungen, vorzugsweise um mindestens 20 %, 30 %, 50 %, 80% oder 100 %.

In einem Ausführungsbeispiel weisen die mehreren ersten Zinkeneinrichtungen und die mehreren zweiten Zinkeneinrichtungen jeweils einen Befestigungsbereich (z. B. ausgeführt als Halterung) auf, der vorzugsweise lösbar (z. B. abnehmbar) an dem Rahmen, insbesondere dem ersten und/oder zweiten Querträger, angebracht ist, auf, und die mehreren Befestigungsbereiche der mehreren ersten Zinkeneinrichtungen sind bezüglich der Arbeitsrichtung jeweils länger als die mehreren Befestigungsbereiche der zweiten Zinkeneinrichtungen, vorzugsweise um mindestens 20 %, 30 %, 50 %, 80% oder 100 %.

Die mehreren ersten Zinkeneinrichtungen am zweiten Querträger können bezüglich der Arbeitsrichtung der Bodenbearbeitungsmaschine die letzten Zinkeneinrichtungen der Bodenauflockerungsvorrichtung und/oder der Bodenbearbeitungsmaschine sein.

Die ersten Zinkeneinrichtungen können in mindestens zwei hintereinander angeordneten Zinken-Querreihen angeordnet sein. Alternativ oder ergänzend können die zweiten Zinkeneinrichtung in mindestens zwei hintereinander angeordneten Zinken-Querreihen angeordnet sein. In einer Ausführungsvariante weisen die mehreren zweiten Zinkeneinrichtungen und die mehreren ersten Zinkeneinrichtungen mindestens ein Gleichteil auf, vorzugsweise ein, bevorzugt hakenförmiges, Stielteil des jeweiligen Zinkenstiels, ein Schar, einen als Halterung ausgeführten Befestigungsbereich zum lösbaren Anbringen der jeweiligen Zinkeneinrichtung am Rahmen, insbesondere am ersten und/oder zweiten Querträger, eine Vorspanneinrichtung und/oder ein Gelenk (z. B. für die Vorspanneinrichtung).

Der erste Querträger kann z. B. der vorderste Querträger des Rahmens und/oder der Bodenauflockerungsvorrichtung sein.

Der zweite Querträger kann z. B. der hinterste Querträger des Rahmens und/oder der Bodenauflockerungsvorrichtung sein.

Der zweite Querträger kann z. B. einen Schlussquerträger des Rahmens und/oder der Bodenauflockerungsvorrichtung bilden, wobei alternativ oder ergänzend der erste Querträger z. B. einen Frontquerträger des Rahmens und/oder der Bodenauflockerungsvorrichtung bilden kann.

Es ist möglich, dass die mehreren ersten Zinkeneinrichtungen und/oder die mehreren zweiten Zinkeneinrichtungen bezüglich einer Arbeitsrichtung der Bodenbearbeitungsmaschine hinter dem ersten und/oder zweiten Querträger angeordnet sind.

In einer weiteren Ausführungsvariante sind die mehreren ersten Zinkeneinrichtungen und die mehreren zweiten Zinkeneinrichtungen die einzigen Zinkeneinrichtungen der Bodenauflockerungsvorrichtung und/oder der Bodenbearbeitungsmaschine. Alternativ oder zusätzlich kann die Bodenauflockerungsvorrichtung die einzige Bodenauflockerungsvorrichtung der Bodenbearbeitungsmaschine sein.

Es ist auch möglich, dass die Bodenauflockerungsvorrichtung weitere Werkzeuge zur Bodenauflockerung aufweist, z. B. Scheiben und/oder Messerwalzen usw., wobei die weiteren Werkzeuge den ersten und/oder zweiten Zinkeneinrichtungen bezüglich der Arbeitsrichtung vorgelagert oder nachgelagert sein können.

In einem Ausführungsbeispiel weist die Bodenbearbeitungsmaschine ferner eine Bodeneinebnungsvorrichtung zur Einebnung des von der Bodenauflockerungsvorrichtung aufgelockerten Bodens auf, wobei die Bodeneinebnungsvorrichtung bezüglich der Arbeitsrichtung insbesondere hinter der Bodenauflockerungsvorrichtung angeordnet sein kann.

In einem weiteren Ausführungsbeispiel sind die mehreren ersten Zinkeneinrichtungen entgegen der Arbeitsrichtung näher zu der Bodeneinebnungsvorrichtung angeordnet als die mehreren zweiten Zinkeneinrichtungen. Damit kann vorteilhaft ein besonders günstiger Bodenfluss bei der Auflockerung erreicht werden, der eine verbesserte Einebnung ermöglicht, als dies bspw. bei größeren Abständen zwischen Zinkeneinrichtungen und Bodeneinebnungsvorrichtung möglich wäre.

In einer Ausführungsform ist ein Abstand zwischen den mehreren ersten Zinkeneinrichtungen und der Bodeneinebnungsvorrichtung bezüglich der Arbeitsrichtung kleiner oder im Wesentlichen gleich 2000 mm, 1500 mm, 1000 mm, 500 mm, 400 mm oder 350 mm.

Beispielsweise kann die Bodeneinebnungsvorrichtung mehrere drehbare Scheiben (z. B. Hohlscheiben), mehrere Nivellatoren, mehrere Striegel und/oder weitere Zinkeneinrichtungen, die zum Einebnen des Bodens angeordnet und ausgebildet sind, aufweisen.

In einem Ausführungsbeispiel weist die Bodenbearbeitungsmaschine ferner eine (z. B. einzige) Bodenrückverfestigungsvorrichtung, vorzugsweise aufweisend eine Packerwalze, zum Rückverfestigen des von der Bodeneinebnungsvorrichtung eingeebneten Bodens, auf. Die Bodenrückverfestigungsvorrichtung kann bezüglich der Arbeitsrichtung z. B. hinter der Bodeneinebnungsvorrichtung angeordnet sein.

Es ist möglich, dass eine Arbeitstiefe der ersten und zweiten Zinkeneinrichtungen durch eine Höhenverstellbarkeit der Bodenrückverfestigungsvorrichtung verstellbar ist.

Die Bodeneinebnungsvorrichtung und/oder die Bodenrückverfestigungsvorrichtung kann insbesondere eine maximale Arbeitsbreite von z. B. kleiner oder gleich 6m, 5m, 4m oder 3m aufweisen.

Zu erwähnen ist, dass der erste Querträger und/oder der zweite Querträger oder zweckmäßig allgemein die Bodenauflockerungsvorrichtung eine Vielzahl an ersten Zinkeneinrichtungen und/oder zweiten Zinkeneinrichtungen wie hierin offenbart aufweisen kann.

In einem bevorzugten Ausführungsbeispiel weist die Bodenauflockerungsvorrichtung zumindest vier Zinkenquerreihen auf, aber vorteilhaft nur zwei zweckmäßig zugeordnete Querträger, nämlichen den ersten Querträger und den zweiten Querträger. Dabei können die zumindest vier Zinken-querreihen z. B. jeweils sowohl erste Zinkeneinrichtungen als auch zweite Zinkeneinrichtungen aufweisen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer Bodenbearbeitungsmaschine gemäß einem Ausführungsbeispiel der vorliegenden Offenbarung;
- Figur 2: eine Vorderansicht der beispielhaften Bodenbearbeitungsmaschine von Figur 1;
- Figur 3: eine Ansicht auf die eine Seite der beispielhaften Bodenbearbeitungsmaschine von Figur 1;
- Figur 4: eine Ansicht auf die andere Seite der beispielhaften Bodenbearbeitungsmaschine von Figur 1;
- Figur 5: eine Hinteransicht der beispielhaften Bodenbearbeitungsmaschine von Figur 1;
- Figur 6: eine Draufsicht der beispielhaften Bodenbearbeitungsmaschine von Figur 1;
- Figur 7: eine Unteransicht der beispielhaften Bodenbearbeitungsmaschine von Figur 1;
- Figur 8: eine perspektivische Ansicht einer Bodenbearbeitungsmaschine gemäß einem anderen Ausführungsbeispiel der vorliegenden Offenbarung;
- Figur 9: eine Vorderansicht der beispielhaften Bodenbearbeitungsmaschine von Figur 8;
- Figur 10: eine Ansicht auf die eine Seite der beispielhaften Bodenbearbeitungsmaschine von Figur 8;
- Figur 11: eine Ansicht auf die andere Seite der beispielhaften Bodenbearbeitungsmaschine von Figur 8;
- Figur 12: eine Hinteransicht der beispielhaften Bodenbearbeitungsmaschine von Figur 8;
- Figur 13: eine Draufsicht der beispielhaften Bodenbearbeitungsmaschine von Figur 8;
- Figur 14: eine Unteransicht der beispielhaften Bodenbearbeitungsmaschine von Figur 8;
- Figur 15: eine perspektivische Ansicht einer (insbesondere ersten) Zinkeneinrichtung;
- Figur 16: eine Seitenansicht der beispielhaften Zinkeneinrichtung von Figur 15;
- Figur 17: eine Rückansicht der beispielhaften Zinkeneinrichtung von Figur 15;
- Figur 18: eine Explosionsdarstellung der beispielhaften Zinkeneinrichtung von 15;
- Figur 19: eine perspektivische Ansicht einer (insbesondere zweiten) Zinkeneinrichtung; und
- Figur 20: eine Seitenansicht der beispielhaften Zinkeneinrichtung von Figur 19.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

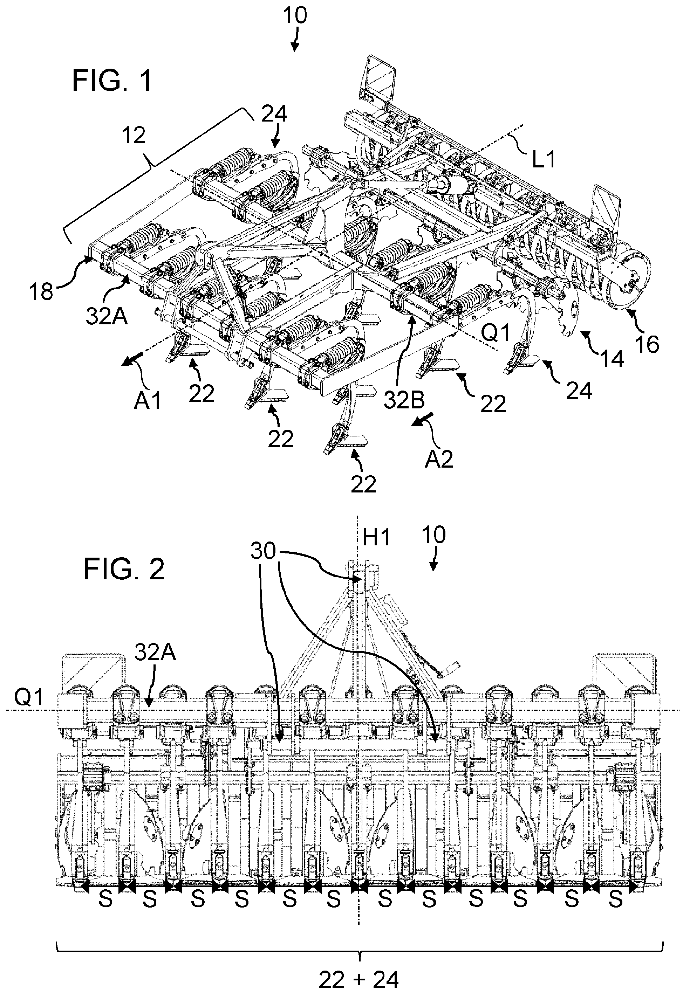

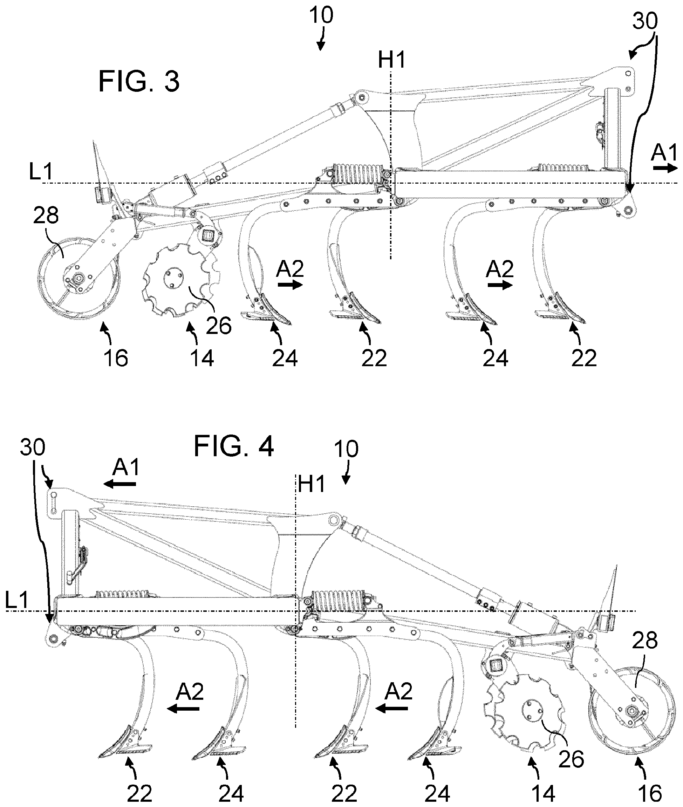

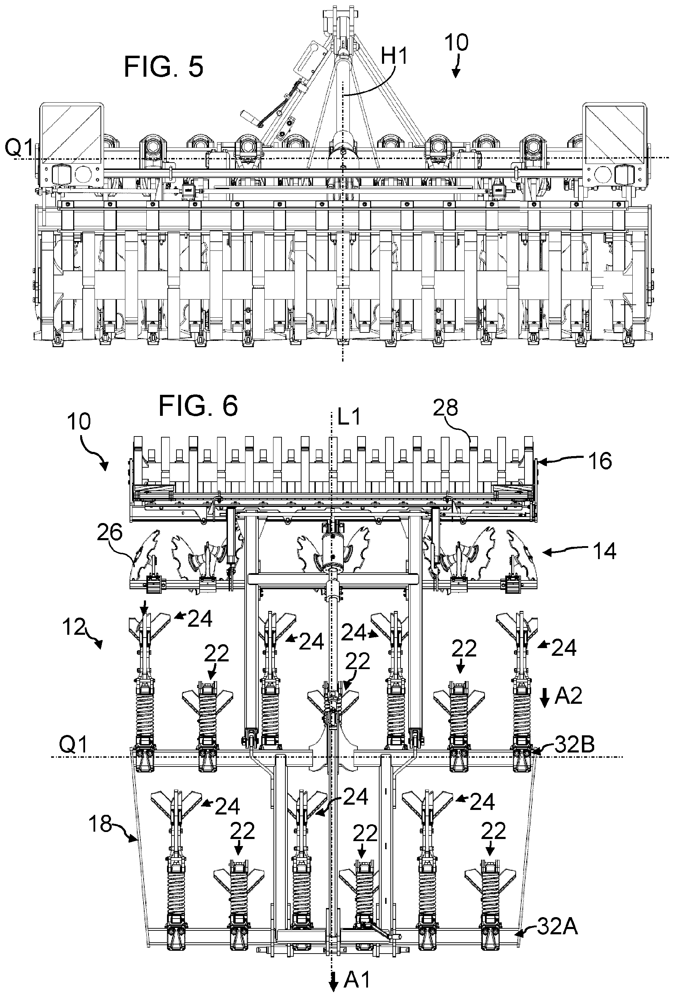

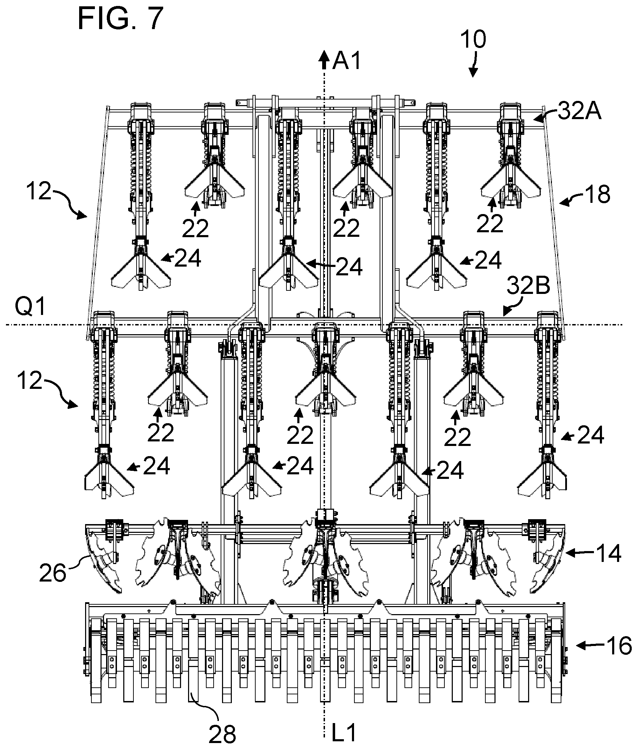

Die Figuren 1 bis 7 zeigen unterschiedliche Ansichten einer landwirtschaftlichen Bodenbearbeitungsmaschine 10 zur Bearbeitung von landwirtschaftlichen Nutzflächen (Ackerboden). Die Bodenbearbeitungsmaschine 10 ist vorzugsweise eine gezogene Bodenbearbeitungsmaschine. Bspw. kann die Bodenbearbeitungsmaschine 10 von einem Zugfahrzeug, wie z. B. einem Traktor, gezogen werden. Die Bodenbearbeitungsmaschine 10 kann in einer Arbeitsrichtung A1 über den Ackerboden bewegt werden. Die Arbeitsrichtung A1 verläuft insbesondere parallel zu einer Längsachse L1 der Bodenbearbeitungsmaschine 10 und z. B. senkrecht zu einer Hochachse H1 der Bodenbearbeitungsmaschine 10.

Die Bodenbearbeitungsmaschine 10 weist einen Rahmen 18 auf, wobei der Rahmen 18 einen ersten Querträger 32A und einen zweiten Querträger 32B umfasst und optional zumindest einen Längsträger. Der Rahmen 18 bildet einen in seiner Umfangsrichtung geschlossenen Rahmen, wobei der erste Querträger 32A bezüglich der Arbeitsrichtung A1 vor dem zweiten Querträger 32B angeordnet ist.

Die Bodenbearbeitungsmaschine 10 weist eine Bodenauflockerungsvorrichtung 12 auf, die mehrere erste Zinkeneinrichtungen 24 und mehrere zweite Zinkeneinrichtungen 22 umfasst, wobei der Rahmen 18 vorzugsweise den Tragrahmen der Bodenauflockerungsvorrichtung 12 bildet. Die ersten und zweiten Zinkeneinrichtungen 24, 22 weisen eine Arbeitsrichtung A2 auf, die zweckmäßig der Arbeitsrichtung A1 der Bodenbearbeitungsmaschine 10 entspricht.

Die Bodenbearbeitungsmaschine 10 kann ferner optional eine Bodeneinebnungsvorrichtung 14 und/oder eine Bodenrückverdichtungsvorrichtung bzw. Bodenrückverfestigungsvorrichtung 16aufweisen.

Die Bodenauflockerungsvorrichtung 12 ist dazu ausgebildet, den Ackerboden aufzulockern. Die Bodenauflockerungsvorrichtung 12 kann bezüglich der Arbeitsrichtung A1, vorzugsweise direkt, vor der Bodeneinebnungsvorrichtung 14 angeordnet sein.

Am ersten Querträger 32A sind mehrere erste Zinkeneinrichtungen 24 und mehrere zweite Zinkeneinrichtungen 22, vorzugsweise schwenkbar, angebracht (z. B. lösbar oder unlösbar). Die ersten Zinkeneinrichtungen 24 und die zweiten Zinkeneinrichtungen 22 sind (zweckmäßig in Längsrichtung des ersten Querträgers 32A) z. B. abwechselnd nebeneinander am ersten Querträger 32A verteilt angeordnet.

Am zweiten Querträger 32B sind ebenfalls mehrere erste Zinkeneinrichtungen 24 und mehrere zweite Zinkeneinrichtungen 22, vorzugsweise schwenkbar, angebracht (z. B. lösbar oder unlösbar). Die ersten Zinkeneinrichtungen 24 und die zweiten Zinkeneinrichtungen 24 sind (zweckmäßig in Längsrichtung des zweiten Querträgers 32B) z. B. abwechselnd nebeneinander am zweiten Querträger 32B verteilt angeordnet.

Die ersten Zinkeneinrichtungen 24 sind zweckmäßig bezüglich der Arbeitsrichtung A1 länger als die mehreren zweiten Zinkeneinrichtungen 22, sodass vorzugsweise sowohl am ersten Querträger 32A als auch am zweiten Querträger 32B die ersten Zinkeneinrichtungen 24 (zweckmäßig bezüglich der Arbeitsrichtung A1) weiter nach hinten abstehen als die zweiten Zinkeneinrichtungen 22.

Der erste Querträger 32A und der zweite Querträger 32B bildet zusammen mit den ersten Zinkeneinrichtungen 24 und den zweiten Zinkeneinrichtungen 22 vorzugsweise eine z. B. zweibalkige Bodenauflockerungsvorrichtung 12 mit zwei mittels dem ersten Querträger 32A und dem zweiten Querträger 32B gebildeten Querträgerreihen und insbesondere vier mittels den ersten Zinkeneinrichtungen 24 und den zweiten Zinkeinrichtungen 22 gebildeten Zinkenquerreihen.

Die Bodenbearbeitungsmaschine 10 kann insbesondere eine 3-Punkt-Anhängevorrichtung 30 zum Anhängen an ein Zugfahrzeug umfassen, wobei die 3-Punkt-Anhängevorrichtung 30 z. B. an den Rahmen 18 und/oder den ersten Querträger 32A zweckmäßig angebracht sein kann. Alternativ oder ergänzend kann die Bodenbearbeitungsmaschine 10, vorzugsweise die Bodenauflockerungsvorrichtung 12, eine maximale Arbeitsbreite von kleiner oder gleich 6m, 5m, 4m oder 3m aufweisen.

Die Bodenauflockerungsvorrichtung 12 ist mittels der ersten Zinkeneinrichtungen 24 und mittels der zweiten Zinkeneinrichtungen 22 so ausgebildet, dass sie einen Strichabstand S von kleiner oder gleich 30cm, 29cm, 28cm, 27cm, 26cm oder 25cm erzeugt (z. B. Figur 2).

Die Bodenauflockerungsvorrichtung 12 kann mittels der ersten Zinkeneinrichtungen 24 und mittels der zweiten Zinkeneinrichtungen 22 z. B. einen Strichabstand S erzeugen (z. B. 28cm), wobei die ersten Zinkeneinrichtungen 24 und die zweiten Zinkeneinrichtungen 22 am ersten Querträger 32A und am zweiten Querträger 32B mit einem z. B. im Wesentlichen doppelten Strichabstand S (z. B. 56cm) oder sogar mehr als doppelten Strichabstand S voneinander beabstandet sein können.

Der erste Querträger 32A erstreckt sich insbesondere durchgängig und zweckmäßig geradlinig von der einen Außenseite des Rahmens 18 und/oder der Bodenauflockerungsvorrichtung 12 bis zu der anderen Außenseite des Rahmens 18 und/oder der Bodenauflockerungsvorrichtung 12, vorzugsweise so, dass er über seine gesamte Längserstreckung eine durchgängige Tragstruktur bilden kann. Der erste Querträger 32A kann hierbei z. B. eine Längsachse L1 der Bodenbearbeitungsmaschine 10 überspannen.

Auch der zweite Querträger 32B erstreckt sich insbesondere durchgängig und zweckmäßig geradlinig von der einen Außenseite des Rahmens 18 und/oder der Bodenauflockerungsvorrichtung 12 bis zu der anderen Außenseite des Rahmens 18 und/oder der Bodenauflockerungsvorrichtung 12, vorzugsweise so, dass er über seine gesamte Längserstreckung eine durchgängige Tragstruktur bilden kann. Der zweite Querträger 32B kann hierbei z. B. die Längsachse L1 der Bodenbearbeitungsmaschine 10 überspannen.

Am ersten Querträger 32A ist eine Summe aus ersten und zweiten Zinkeneinrichtungen 24, 22 angebracht, nämlich sechs, und am zweiten Querträger 32B ist eine Summe aus ersten und zweiten Zinkeneinrichtungen 24, 22 angebracht, nämlich sieben, sodass die Summe am ersten Querträger 32A kleiner ist als die Summe am zweiten Querträger 32B.

Die Figuren 1 bis 7 zeigen ein Ausführungsbeispiel, bei dem am ersten Querträger 32A exakt drei erste Zinkeneinrichtungen 24 und exakt drei zweite Zinkeneinrichtungen 22 angebracht sind, wobei am zweiten Querträger 32B exakt vier erste Zinkeneinrichtungen 24 und exakt drei zweite Zinkeneinrichtungen 22 angebracht sind. Am ersten Querträger 32A sind die ersten Zinkeneinrichtungen 24 und die zweiten Zinkeneinrichtungen 22 asymmetrisch verteilt angeordnet, wobei am zweiten Querträger 32B die ersten Zinkeneinrichtungen 24 und die zweiten Zinkeneinrichtungen 22 symmetrisch verteilt angeordnet sind.

Vorzugsweise kann die Bodenauflockerungsvorrichtung 12 zur nichtwendenden Bodenbearbeitung, zur Lockerung und Krümelung des Bodens und/oder zur Unkrautbekämpfung und Einarbeitung von Ernterückständen in den Boden ausgebildet sein. Die Bodenauflockerungsvorrichtung 12 kann bevorzugt vierreihig ausgebildet sein und somit vorzugsweise vier Zinkenquerreihen aufweisen.

Es ist möglich, dass die Bodenauflockerungsvorrichtung 12 mehrere weitere Bodenauflockerungswerkzeuge aufweist, wie z. B. Scheiben und/oder Messerwalzen usw. Die mehreren weiteren Bodenauflockerungswerkzeuge können den zweiten Zinkeneinrichtungen 22 und/oder den ersten Zinkeneinrichtungen 24 bezüglich der Arbeitsrichtung A1 bspw. vorgelagert oder nachgelagert sein.

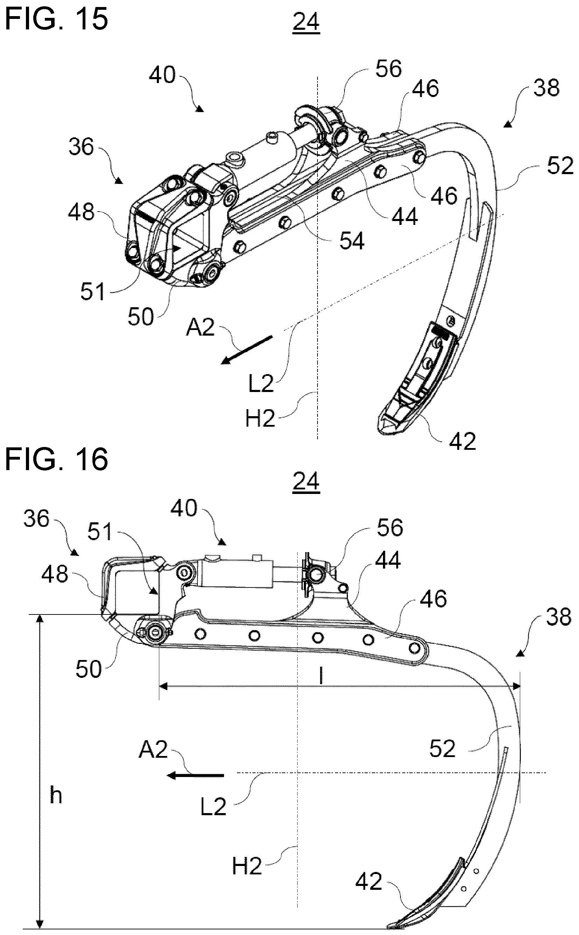

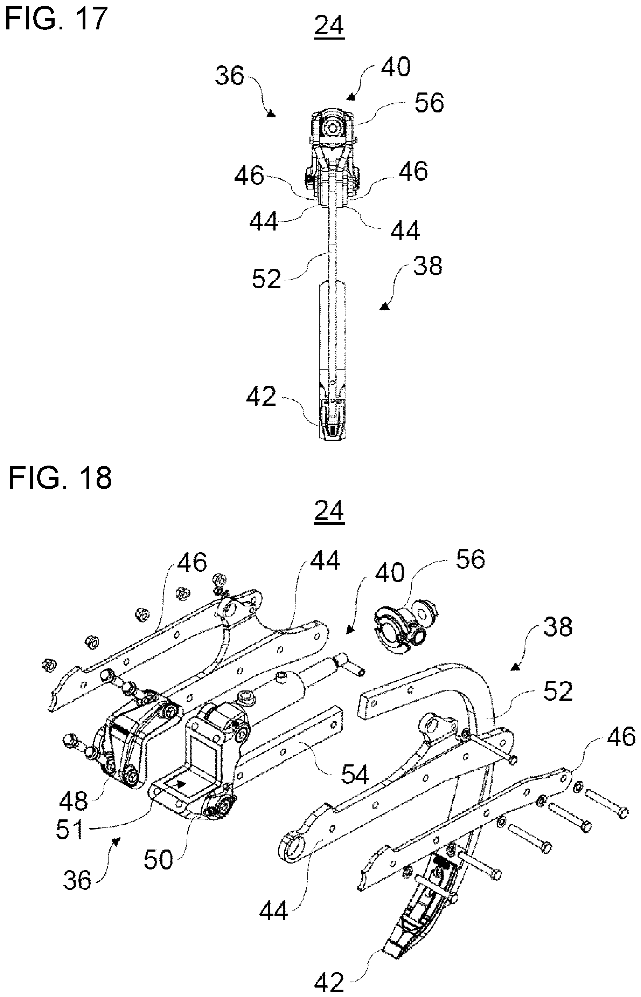

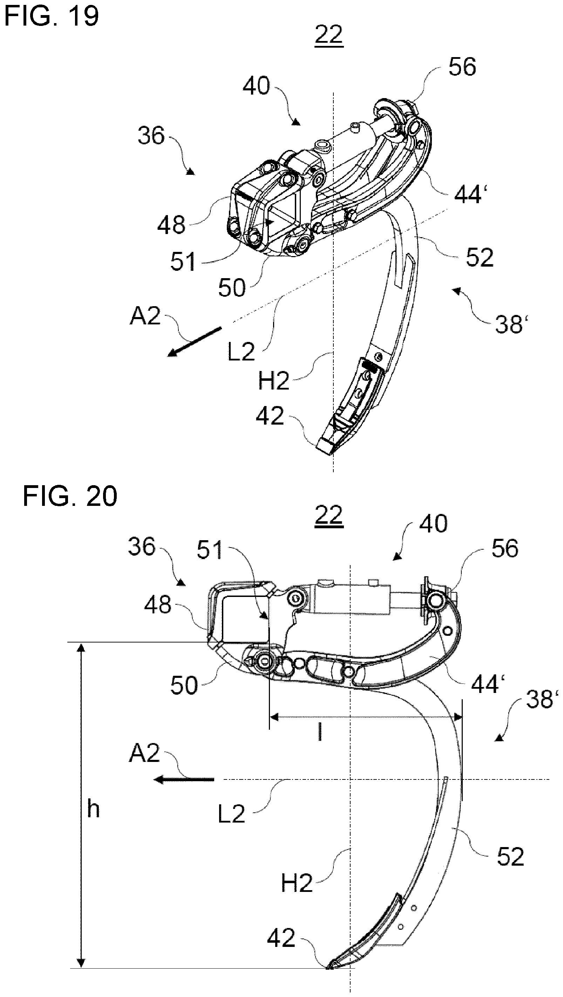

Eine beispielhafte Ausführungsform für die ersten Zinkeneinrichtungen 24 ist unter Bezugnahme auf die Figuren 15 bis 18 beschrieben. Eine beispielhafte Ausführungsform für die zweiten Zinkeneinrichtungen 22 ist unter Bezugnahme auf die Figuren 19 und 20 beschrieben.

Die mehreren Zinkeneinrichtungen 22, 24 sind zum Auflockern des Ackerbodens ausgebildet. Hierzu können die Zinkeneinrichtungen 22, 24 den Ackerboden durchfurchen. Eine Eindringtiefe der Zinkeneinrichtungen 22, 24 in den Ackerboden kann abhängig vom jeweiligen Anwendungsfall sein und bspw. mittels der Bodenrückverfestigungsvorrichtung 16 verstellbar sein.

Die mehreren Zinkeneinrichtungen 22, 24 sind bevorzugt dazu ausgebildet bzw. verwendbar, bis zu einer maximalen Arbeitstiefe von 250 mm bis 350 mm in den Boden einzudringen.

Eine Vorspannung der ersten Zinkeneinrichtungen 24 und eine Vorspannung der zweiten Zinkeneinrichtungen 22 können unterschiedlich sein. Die Zinkeneinrichtungen 22, 24 können jeweils schwenkbar gelagerte Zinkenstiele aufweisen.

Die ersten Zinkeneinrichtungen 24 können entgegen der Arbeitsrichtung A1 bzw. bezüglich der Längsachse L1 näher an der Bodeneinebnungsvorrichtung 14 angeordnet sein als die zweiten Zinkeneinrichtungen 22. Vorzugsweise kann ein Abstand bezüglich der Längsachse L1 zwischen den ersten Zinkeneinrichtungen 24 und der Bodeneinebnungsvorrichtung 14 kleiner oder im Wesentlichen gleich 2000 mm, 1000 mm, 500 mm, 400 mm oder 350 mm sein.

Die ersten Zinkeinrichtungen 24 sind bezüglich der Längsachse L1 länger als die zweiten Zinkeneinrichtungen 22. Vorzugsweise sind die ersten Zinkeneinrichtungen 24 um mindestens 20%, 30%, 50 %, 80% oder 100 % länger als die zweiten Zinkeneinrichtungen 22.

Beispielsweise können Zinkenstiele der ersten Zinkeneinrichtungen 24 bezüglich der Längsachse L1 länger als die Zinkenstiele der zweiten Zinkeneinrichtungen 22 sein. Bevorzugt können die Zinkenstiele der ersten Zinkeneinrichtungen 24 um mindestens 20 %, 30 %, 50 %, 80% oder 100 % länger als die Zinkenstiele der zweiten Zinkeneinrichtungen 22 sein.

Es ist allerdings auch möglich, dass zusätzlich oder alternativ andere Elemente der ersten Zinkeneinrichtungen 24 bezüglich der Längsachse L1 länger sind als korrespondierende Elemente der zweiten Zinkeneinrichtungen 22. Beispielsweise kann eine Halterung oder ein Befestigungsbereich zum lösbaren Anbringen (z. B. Anklemmen) der ersten Zinkeneinrichtung 24 am Rahmen 18 bezüglich der Längsachse L1 bzw. der Arbeitsrichtung A1 länger sein als eine Halterung oder ein Befestigungsbereich zum lösbaren Anbringen (z. B. Anklemmen) der zweiten Zinkeneinrichtung 22 am Rahmen 18, z. B. um mindestens 20 %, 30 %, 50 %, 80% oder 100 %. Beispielsweise kann ein Schwenkarm zum schwenkbaren Lagern eines Zinkenstiels der ersten Zinkeneinrichtung 24 bezüglich der Längsachse L1 bzw. der Arbeitsrichtung A1 länger sein als ein Schwenkarm zum schwenkbaren Lagern eines Zinkenstiels der zweiten Zinkeneinrichtung 22, z. B. um mindestens 20 %, 30 %, 50 %, 80% oder 100 %.

Beispielsweise können die Zinkeneinrichtungen 22, 24 in mehreren ZinkenReihen (insbesondere Zinken-Quer-Reihen) entlang der Längsachse L1 beabstandet voneinander angeordnet sein und zwar vorzugsweise in vier Zinken-Reihen.

Vorzugsweise sind die ersten Zinkeneinrichtungen 24 und/oder die zweiten Zinkeneinrichtungen 22 bezüglich einer Querachse Q1 der Bodenbearbeitungsmaschine 10 beabstandet voneinander angeordnet.

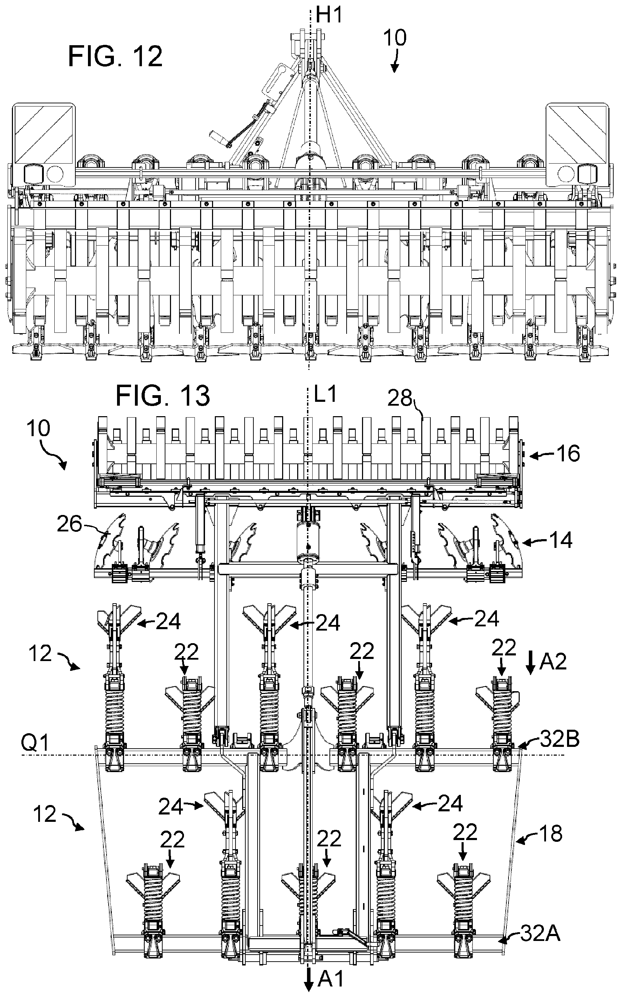

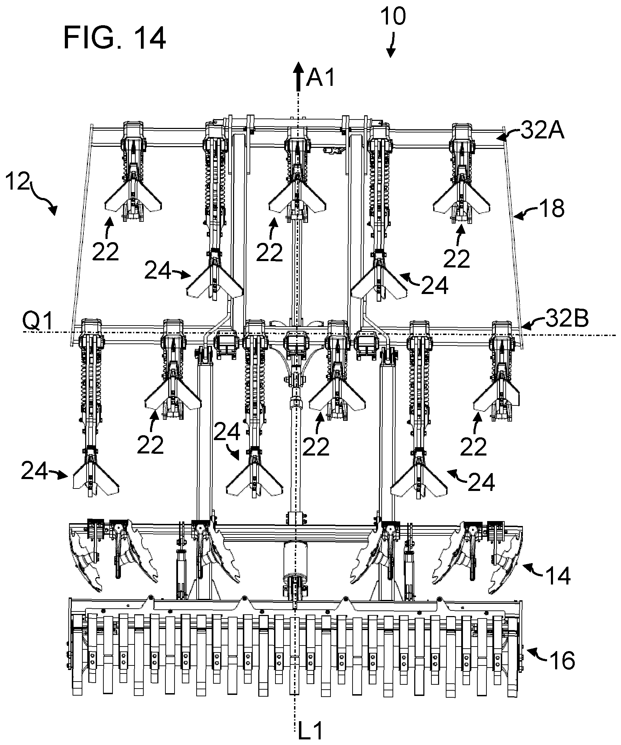

In einem bevorzugten Ausführungsbeispiel (vgl. z. B. Figuren 1 bis 7 und Figuren 8 bis 14) weist die Bodenauflockerungsvorrichtung 12 vier Zinkenquerreihen auf, aber nur zwei zweckmäßig zugeordnete Querträger, nämlich den ersten Querträger 32A und den zweiten Querträger 32B, wobei die vier Zinkenquerreihen jeweils sowohl erste Zinkeneinrichtungen 24 als auch zweite Zinkeneinrichtungen 22 aufweisen.

Die Bodenauflockerungsvorrichtung 12 kann z. B. an dem Rahmen 18 getragen sein. Die Zinkeneinrichtungen 22, 24 sind wie bereits erwähnt vorzugsweise an den Querträgern 32A und 32B des Rahmens 18, z. B. lösbar, angebracht. Vorzugsweise sind die Zinkeneinrichtungen 22, 24 an den Querträgern 32A und 32B des Rahmens 18 formschlüssig und kraftschlüssig angeklemmt. Die Querträger 32A und 32B können bspw. als Rohre oder Balken ausgeführt sein und/oder ein Vierkantprofil aufweisen. Die Querträger 32A und 32B können z. B. miteinander über mehrere Längsträger des Rahmens 18 verbunden sein.

Die Bodeneinebnungsvorrichtung 14 kann dazu ausgebildet sein, den von der Bodenauflockerungsvorrichtung 12 aufgelockerten Boden einzuebnen. Die Bodeneinebnungsvorrichtung 14 ist bezüglich der Arbeitsrichtung A1 hinter der Bodenauflockerungsvorrichtung 12 angeordnet. Die Bodeneinebnungsvorrichtung 14 kann bezüglich der Arbeitsrichtung A1 vor der Bodenrückverfestigungsvorrichtung 16 angeordnet sein.

Die Bodeneinebnungsvorrichtung 14 kann auf unterschiedliche Arten ausgeführt sein. Beispielsweise kann die Bodeneinebnungsvorrichtung 14 eine Mehrzahl Einebnungselementen aufweisen. Bevorzugt können die Einebnungselemente drehbare (zum Beispiel Hohl-) Scheiben 26 aufweisen. Die Scheiben 26 können jeweils eine Drehachse aufweisen, die angeschrägt zu der Längsachse L1 und angeschrägt zu der Querachse Q1 ist. Die sich drehenden Scheiben 26 können bezüglich der Querachse Q1 nebeneinander in einer Reihe angeordnet sein. Die sich drehenden Scheiben 26 können in einer Querreihe quer zu der Längsachse L1 bzw. der Arbeitsrichtung A1 angeordnet sein. Die sich drehenden Scheiben 26 können die von der Bodenauflockerungsvorrichtung 12 erzeugten Gräben bzw. Furchen einebnen.

Alternativ oder zusätzlich zu den Scheiben 26 kann die Bodeneinebnungsvorrichtung 14 beispielsweise Striegel, mehrere weitere Zinkeneinrichtungen und/oder Nivellatoren als Einebnungselemente aufweisen. Die weiteren Zinkeneinrichtungen wären dementsprechend im Gegensatz zu den Zinkeneinrichtungen 22, 24 dazu ausgebildet und angeordnet, den bereits aufgelockerten Boden wieder einzuebnen. Beispielsweise können die weiteren Zinkeneinrichtungen weniger tief in den Ackerboden eindringen als die Zinkeneinrichtungen 22, 24. Alternativ oder zusätzlich können die weiteren Zinkeneinrichtungen beispielsweise andere Schare als die Zinkeneinrichtungen 22, 24 tragen, wobei diese anderen Schare zum Einebnen ausgebildet sind.

Die Bodeneinebnungsvorrichtung 14 kann an dem Rahmen 18 getragen sein. Beispielsweise können die Scheiben 26, die Striegel oder die weiteren Zinkeneinrichtungen an einem oder mehreren Querträgern des Rahmens 18 angebracht sein.

Die Bodenrückverfestigungsvorrichtung 16 kann dazu ausgebildet sein, den von der Bodenauflockerungsvorrichtung 12 aufgelockerten und von der Bodeneinebnungsvorrichtung 14 eingeebneten Boden wieder zu verfestigen. Die Bodenrückverfestigungsvorrichtung 16 kann bezüglich der Arbeitsrichtung A1 hinter der Bodenauflockerungsvorrichtung 12 und hinter der Bodeneinebnungsvorrichtung 14 angeordnet sein. Beispielsweise kann die Bodenrückverfestigungsvorrichtung 16 eine oder mehrere (gleiche oder unterschiedliche) drehbare Packerwalzen 28 aufweisen. Die Packerwalze 28 kann je nach Anwendungsfall in unterschiedlichen Konfigurationen ausgeführt sein. Die Bodenrückverfestigungsvorrichtung 16 bzw. die Packerwalze 28 kann an dem Rahmen 18, vorzugsweise dem zweiten Querträger 32B des Rahmens 18, getragen sein, bevorzugt höhenverstellbar.

Der Rahmen 18 ist vorzugsweise aus mehreren Längsträgern und Querträgern 32A, 32B gebildet. Die Längsträger und/oder die Querträger 32A, 32B können jegliches Profil bzw. jegliche Querschnittsform aufweisen, z. B. rund oder mehreckig. Bevorzugt sind die Längsträger und/oder die Querträger als Vierkantrohre oder Vierkantbalken ausgeführt.

Der Rahmen 18 kann die Bodenauflockerungsvorrichtung 12 und ggf. die Bodeneinebnungsvorrichtung 14 und/oder die Bodenrückverfestigungsvorrichtung 16tragen.

Der Rahmen 18 oder allgemein die Bodenbearbeitungsmaschine 10 umfasst vorzugsweise kein Stützrad und vorzugsweise auch kein Fahrwerksrad zum Abstützen der Bodenbearbeitungsmaschine 10.

In einer Arbeitsposition kann die Bodenbearbeitungsmaschine 10 vorzugsweise ausschließlich mittels z. B. der Bodenrückverfestigungsvorrichtung 16 und der 3-Punkt-Anhängevorrichtung 30 getragen sein.

Vorzugsweise kann durch eine Höhenverstellung der Bodenrückverfestigungsvorrichtung 16 eine Verstellung einer Arbeitstiefe der Zinkeneinrichtungen 22, 24 vorgenommen werden.

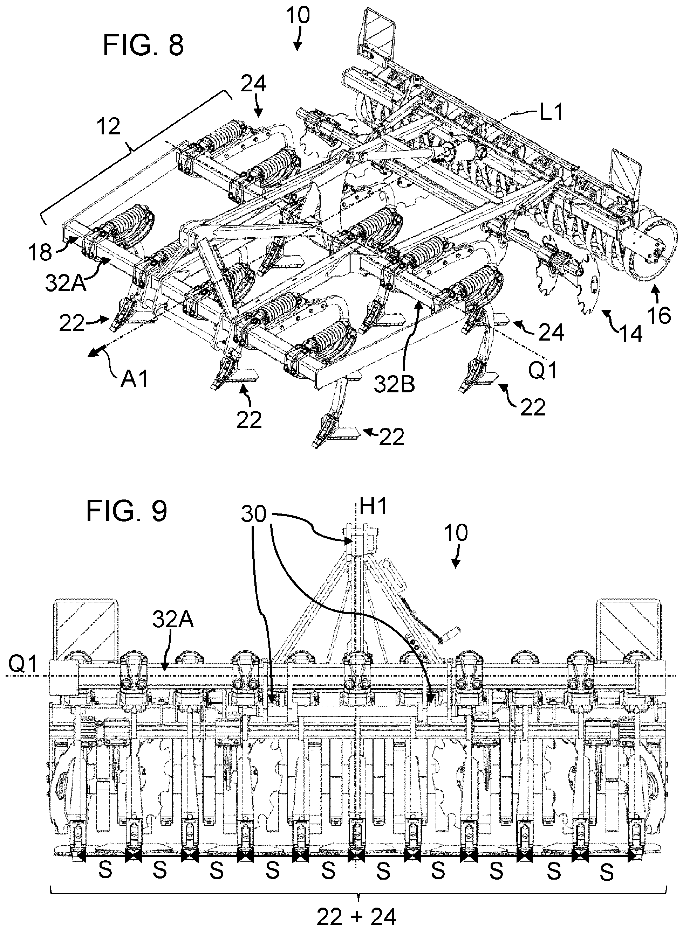

Die Figuren 8 bis 14 zeigen unterschiedliche Ansichten einer landwirtschaftlichen Bodenbearbeitungsmaschine 10 gemäß einem anderen Ausführbeispiel der Erfindung.

Eine Besonderheit der Bodenbearbeitungsmaschine 10 ist z. B., dass am ersten Querträger 32A exakt zwei erste Zinkeneinrichtungen 24 und exakt drei zweite Zinkeneinrichtungen 22 angebracht sind, wobei am zweiten Querträger 32B exakt drei erste Zinkeneinrichtungen 24 und exakt drei zweite Zinkeneinrichtungen 22 angebracht sind.

Am ersten Querträger 32A sind die ersten Zinkeneinrichtungen 24 und die zweiten Zinkeneinrichtungen 22 symmetrisch verteilt angeordnet, wobei am zweiten Querträger 32B die ersten Zinkeneinrichtungen 24 und die zweiten Zinkeneinrichtungen 22 asymmetrisch verteilt angeordnet sind.

Am ersten Querträger 32A ist eine Summe aus ersten und zweiten Zinkeneinrichtungen 24, 22 angebracht ist und am zweiten Querträger 32B ist eine Summe aus ersten und zweiten Zinkeneinrichtungen 24, 22 angebracht, wobei die Summe am ersten Querträger 32A vorzugsweise kleiner ist als die Summe am zweiten Querträger 32B. Im Ausführungsbeispiel der Figuren 1 bis 7 beträgt die Summe am ersten Querträger 32A z. B. sechs und am zweiten Querträger 32B z. B. sieben, wobei im Ausführungsbeispiel der Figuren 8 bis 14 die Summe am ersten Querträger 32A z. B. fünf beträgt und am zweiten Querträger 32B z. B. sechs.

Sowohl im Ausführungsbeispiel der Figuren 1 bis 7 als auch im Ausführungsbeispiel der Figuren 8 bis 14 bilden der erste Querträger 32A und der zweite Querträger 32B mit den ersten Zinkeneinrichtungen 24 und den zweiten Zinkeneinrichtungen 22 ein zweibalkige, insbesondere zweiquerbalkige, Bodenauflockerungsvorrichtung 12 mit vorzugsweise exakt vier Zinkenquerreihen. Die Bodenauflockerungsvorrichtung 12 und/oder der Rahmen 18 umfasst vorzugsweise nur den ersten Querträger 32A und den zweiten Querträger 32B als Querträgerstruktur zum Tragen der ersten Zinkeneinrichtungen 24 und der zweiten Zinkeneinrichtungen 22, vorteilhaft aber zumindest vier Zinkenquerreihen.

Die Figuren 15 bis 18 zeigen unterschiedliche Ansichten eines bevorzugten Ausführungsbeispiels für die erste Zinkeneinrichtung 24, insbesondere für die ersten Zinkeneinrichtungen 24, die jeweils zweckmäßig gemäß den Figuren 15 bis 18 ausgebildet sein können.

Die erste Zinkeneinrichtung 24 kann den Boden in einer Arbeitsrichtung A2 entsprechend der Arbeitsrichtung A1 der Bodenbearbeitungsmaschine 10 auflockern. Die erste Zinkeneinrichtung 24 kann eine Längsachse L2 aufweisen, die parallel zu der Längsachse L1 der Bodenbearbeitungsmaschine 10 ist. Die erste Zinkeneinrichtung 24 kann eine Hochachse H2 aufweisen, die parallel zu der Hochachse H1 der Bodenbearbeitungsmaschine 10 ist.

Die erste Zinkeneinrichtung 24 weist einen Befestigungsbereich 36, einen Zinkenstiel 38, eine Vorspanneinrichtung 40 und ein Schar 42 auf. Die erste Zinkeneinrichtung 24 kann ferner optional mindestens einen Schwenkarm 44 und/oder mindestens ein Versteifungselement 46 aufweisen.

Der Befestigungsbereich 36 ist bevorzugt als eine Halterung ausgeführt, wie dargestellt. Die Halterung ist dazu ausgebildet, die erste Zinkeneinrichtung 24 an den Rahmen 18 der Bodenbearbeitungsmaschine 10 und zwar insbesondere an den ersten Querträger 32A bzw. den zweiten Querträger 32Banzubringen (z. B. zu klemmen, vorzugsweise form- und kraftschlüssig).

Beispielsweise kann die Halterung zwei Halterungskörper 48, 50 aufweisen. Die Halterungskörper 48, 50 können zwischen sich eine Aufnahme, vorzugsweise ein Durchgangsloch, für einen Träger des Rahmens 18 bilden. Die Aufnahme kann bspw. einen mehreckigen Querschnitt bzw. ein mehreckiges Profil aufweisen, z. B. viereckig wie dargestellt ist. Die Aufnahme kann bspw. durch zwei gegenüberliegende, vertiefte Abschnitte der Halterungskörper 48, 50 gebildet sein. Zum Befestigen der ersten Zinkeneinrichtung 24 an dem Rahmen 18 (insbesondere an den ersten Querträger 32A bzw. den zweiten Querträger 32B), kann ein Träger des Rahmens 18 in der Aufnahme aufgenommen und die Halterungskörper 48, 50 aneinander befestigt sein, z. B. mittels mehrerer Schraubverbindungen. Der Träger kann kraft- und formschlüssig durch die Halterungskörper 48, 50 in der Aufnahme geklemmt sein.

Alternativ kann der Befestigungsbereich 36 bspw. dazu ausgebildet sein, an einer sogenannten Abschersicherung des Rahmens 18 (insbesondere des ersten Querträgers 32A bzw. des zweiten Querträgers 32B) z. B. lösbar angebracht zu werden (nicht in den Figuren dargestellt). Bspw. kann ein solcher Befestigungsbereich plattenförmig sein und mindestens ein Durchgangsloch aufweisen. Beispielsweise kann ein solcher Befestigungsbereich integral-einstückig mit dem Zinkenstiel 38 ausgebildet sein.

Der Befestigungsbereich 36 weist einen Kontaktabschnitt bzw. eine Kontaktfläche 51 auf, der im am Rahmen 18 (insbesondere am ersten Querträger 32A bzw. am zweiten Querträger 32B) montierten Zustand am Rahmen 18 (insbesondere am ersten Querträger 32A bzw. am zweiten Querträger 32B) anliegt. Der Kontaktabschnitt 51 kann bspw. durch Innenflächen der Halterung, vorzugsweise der Halterungskörper 48, 50, gebildet sein.

Der Zinkenstiel 38 kann vorzugweise schwenkbar an dem Befestigungsbereich 36 gelagert sein, z. B. mittels eines Drehbolzens oder Drehzapfens. Eine Schwenkachse kann bevorzugt senkrecht zur Hochachse H2 und senkrecht zu der Arbeitsrichtung A2 bzw. der Längsachse L2 sein. Vorzugsweise kann der Zinkenstiel 38 bezüglich der Arbeitsrichtung A2 hinter dem Befestigungsbereich 36 angeordnet sein.

Der Zinkenstiel 38 trägt das Schar 42 an einem bodenseitigen Ende des Zinkenstiels 38, vorzugsweise lösbar. Beispielsweise kann das Schar 42 mittels mehrerer Schraubverbindungen mit dem Zinkenstiel 38 verbunden sein. Alternativ kann das Schar 42 bspw. integral-einstückig mit dem Zinkenstiel 38 ausgebildet sein.

Der Zinkenstiel 38 ist bevorzugt stabförmig. Beispielsweise kann der Zinkenstiel 38 als ein Mehrkantstab, vorzugsweise ein Vierkantstab, ausgeführt sein.

Der Zinkenstiel 38 kann einteilig oder mehrteilig sein. Beispielsweise kann der Zinkenstiel 38 ein erstes Stielteil 52 und ein zweites Stielteil 54 aufweisen.

Das erste Stielteil 52 kann bezüglich der Arbeitsrichtung A2 hinter dem zweiten Stielteil 54 angeordnet sein. Das erste Stielteil 52 kann hakenförmig sein. Das erste Stielteil 52 kann das bodenseitige Ende des Zinkenstiels 38 aufweisen. Das Schar 42 kann an dem ersten Stielteil 52 befestigt sein. Alternativ kann das Schar 42 bspw. integral-einstückig mit dem ersten Stielteil 52 ausgebildet sein.

Das zweite Stielteil 54 kann geradlinig sein. Das zweite Stielteil 54 kann direkt und/oder mittels der Schwenkarme 44 schwenkbar mit dem Befestigungsbereich 36 verbunden sein. Die schwenkbare Lagerung kann parallel zu einer schwenkbaren Lagerung der Vorspanneinrichtung 40 an dem Befestigungsbereich 36 sein. Das zweite Stielteil 54 kann sich einen Drehbolzen oder Drehzapfen mit dem mindestens einen Schwenkarm 44 zur schwenkbaren Lagerung an dem Befestigungsbereich 36 teilen.

Die Stielteile 52, 54 können direkt aneinander und/oder mittels der Schwenkarme 44 aneinander befestigt sein, z. B. mittels Schraubverbindungen. Die Stielteile 52, 54 können jeweils ein oder mehrere Löcher, vorzugsweise Durchgangslöcher, für die Schraubverbindungen aufweisen. Die Löcher können bezüglich der Längsachse L2 bzw. der Arbeitsrichtung A2 voneinander beabstandet sein. Die Stielteile 52, 52 können als Flachprofile ausgeführt sein.

Es ist auch möglich, dass bspw. der zweite Stielteil 54 weggelassen wird oder die Stielteile 52 und 54 integral einstückig miteinander ausgebildet sind.

Die Vorspanneinrichtung 40 ist dazu ausgebildet, den Zinkenstiel 38 und das Schar 42 gegen den Boden elastisch vorzuspannen. Die Vorspannkraft kann durch eine Konstruktion der Vorspanneinrichtung 40 vorgegeben oder einstellbar sein. Vorzugsweise kann die Vorspanneinrichtung 40 ein druckbeaufschlagter Fluidzylinder, z. B. Hydraulikzylinder, sein, wie in den Figuren dargestellt ist. Alternativ oder zusätzlich kann die Vorspanneinrichtung 40 bspw. eine Feder, vorzugsweise eine Schraubenfeder, aufweisen.

Die Vorspanneinrichtung 40 kann oberhalb von dem Zinkenstiel 38, vorzugsweise dem zweiten Stielteil 54, angeordnet sein. Die Vorspanneinrichtung 40 kann bezüglich der Arbeitsrichtung A2 hinter dem Befestigungsbereich 36 angeordnet sein.

Die Vorspanneinrichtung 40 ist bevorzugt schwenkbar mit dem Befestigungsbereich 36 verbunden, z. B. mittels eines Drehzapfens oder eines Drehbolzens. Die Schwenkachse ist vorzugsweise senkrecht zur Hochachse H1, senkrecht zur Arbeitsrichtung A2 bzw. Längsachse L2 und/oder parallel zur schwenkbaren Lagerung der Schwenkarme 44 und/oder des Zinkenstiels 38 an dem Befestigungsbereich 36.

Vorzugsweise ist die Vorspanneinrichtung 40 schwenkbar mit dem Zinkenstiel 38 verbunden, z. B. direkt oder indirekt. Die schwenkbare Verbindung kann bspw. mittels eines Gelenks 56 und der Schwenkarme 44 bereitgestellt sein. Das Gelenk 56 kann bspw. schwenkbar mit sich entlang der Hochachse H2 nach oben erstreckenden Abschnitten bzw. Vorsprüngen der Schwenkarme 44 verbunden sein. Das Gelenk 56 kann bspw. einen Drehbolzen bzw. Drehzapfen und/oder einen Kugelgelenkabschnitt aufweisen.

Die schwenkbare Verbindung der Vorspanneinrichtung 40 mit der Halterung 38 kann bezüglich der Arbeitsrichtung A2 vorzugsweise vor der schwenkbaren Verbindung der Vorspanneinrichtung 40 mit den Schwenkarmen 44 bzw. dem Zinkenstiel 38 angeordnet sein.

Das Schar 42 ist zum Eingreifen in und Auflockern des Bodens ausgebildet. Das Schar 42 kann lösbar, z. B. mittels Schraubverbindungen, an dem Zinkenstiel 38 befestigt sein oder bspw. integral einstückig mit dem Zinkenstiel 38 ausgebildet sein. Das Schar 42 kann je nach Anwendungsfall konstruktiv anders ausgeführt sein, z. B. in Abhängigkeit von der gewünschten Eindringtiefe und der Bodenbeschaffenheit. Das Schar 42 kann weitere als die dargestellten Teile aufweisen, z. B. Teile links und rechts am Zinkenstiel 38 in einer Vorderansicht des Zinkenstiels 38 (nicht dargestellt).

Die Schwenkarme 44 sind dazu ausgebildet, den Zinkenstiel 38 schwenkbar mit dem Befestigungsbereich 36 zu verbinden, z. B. mittels eines Drehbolzens oder eines Drehzapfens und/oder parallel zu einer schwenkbaren Lagerung der Vorspanneinrichtung 40 an dem Befestigungsbereich 36. Die Schwenkarme 44 sind vorzugsweise mittels des Gelenks 56 schwenkbar mit der Vorspanneinrichtung 40 verbunden.

Die Schwenkarme 44 können sich parallel zu dem zweiten Stielteil 54 erstrecken. Die Schwenkarme 44 sind bevorzugt länglich ausgeführt. Die Schwenkarme 44 können als Flachprofile ausgeführt sein.

Die Schwenkarme 44 können direkt unter der Vorspanneinrichtung 40 angeordnet sein. Bezüglich der Arbeitsrichtung A1 können die Schwenkarme 44 hinter dem Befestigungsbereich 36 angeordnet sein. Die Schwenkarme 44 können an dem Zinkenstiel 38 anliegen.

Die Schwenkarme 44 können mehrere Löcher, vorzugsweise Durchgangslöcher, für die Schraubverbindungen mit dem Zinkenstiel 38, vorzugsweise den Stielteilen 52, 54, aufweisen. Die Löcher können bezüglich der Längsachse L2 bzw. der Arbeitsrichtung A2 voneinander beabstandet sein. Der Zinkenstiel 38 kann zwischen den Schwenkarmen 44 geklemmt sein.

Die dargestellten Schwenkarme 44 sind paarweise vorgesehen. Es ist allerdings auch möglich, dass bspw. nur ein Schwenkarm 44 umfasst ist. Alternativ kann bspw. auch kein Schwenkarm umfasst sein und der Zinkenstiel 38 nur direkt schwenkbar an dem Befestigungsbereich 36 gelagert sein.

Es ist möglich, dass eine Gesamtlänge des Zinkenstiels 38 und/oder der ersten Zinkeneinrichtung 24 bezüglich der Arbeitsrichtung A2 bzw. der Längsachse L2 verstellbar ist. Beispielsweise kann eine gewünschte Gesamtlänge durch Auswahl der miteinander fluchtenden Löcher des Zinkenstiels 38 und der Schwenkarme 44 erreicht werden. Diese Technik kann eine diskrete Verstellung der Gesamtlänge ermöglichen und eine Lochplattenverbindung basieren.

Die Versteifungselemente 46 sind dazu ausgebildet, die Schwenkarme 44 und den Zinkenstiel 38 zu versteifen. Die Versteifungselemente 46 können an den Schwenkarmen 44 anliegen. Die Versteifungselemente 46 können direkt unterhalb von der Vorspannungseinrichtung 44 angeordnet sein. Bevorzugt wirkt die Versteifung insbesondere in einem Abschnitt des Zinkenstiels 38 und der Schwenkarme 44 direkt unterhalb der Vorspanneinrichtung 40 und angrenzend an den Befestigungsbereich 36.

Die Versteifungselemente 46 sind vorzugsweise als längliche Versteifungsbleche ausgeführt. Die Versteifungselemente 46 können als Flachprofile ausgeführt sein. Die Versteifungselemente 46 können mehrere Löcher, vorzugsweise Durchgangslöcher, für die Schraubverbindungen mit dem Zinkenstiel 38, vorzugsweise den Stielteilen 52, 54, und den Schwenkarmen 44 aufweisen. Die Löcher können bezüglich der Längsachse L2 bzw. der Arbeitsrichtung A2 voneinander beabstandet sein. Der Zinkenstiel 38 und die Schwenkarme 44 können zwischen den Versteifungselementen 46 geklemmt sein.

Vorzugsweise fluchten die Löcher in den Versteifungselementen 46, den Schwenkarmen 44 und dem Zinkenstiel 38 (den Stielteilen 52, 54) miteinander.

Die dargestellten Versteifungselemente 46 sind paarweise vorgesehen. Es ist allerdings auch möglich, dass bspw. nur ein Versteifungselement 46 umfasst ist. Alternativ kann bspw. auch kein Versteifungselement umfasst sein.

Die erste Zinkeneinrichtung 24 ist bezüglich der Längsachse L2 vergleichsweise lang bzw. länger als herkömmlich ausgebildet, insbesondere länger als die zweite Zinkeneinrichtung 22.

Die vergleichsweise große Gesamtlänge der ersten Zinkeneinrichtung 24 kann durch unterschiedliche, miteinander kombinierbare Maßnahmen erreicht werden, z. B. durch eine verlängerte Ausbildung des Zinkenstiels 38, eine verlängerte Ausbildung des mindestens einen Schwenkarms 44 und/oder eine verlängerte Ausbildung des Befestigungsbereichs 36 bezüglich der Arbeitsrichtung A2 bzw. der Längsachse L2.

Die große Gesamtlänge der ersten Zinkeneinrichtung 24 kann durch unterschiedliche geometrische Verhältnisse der ersten Zinkeneinrichtung 24 charakterisiert sein, die einzeln oder in jeglicher Kombination miteinander auftreten können.

Beispielsweise kann eine Gesamtlänge der ersten Zinkeneinrichtung 24 bezüglich der Arbeitsrichtung A2 bzw. der Längsachse L2 mindestens so groß wie eine Gesamthöhe der ersten Zinkeneinrichtung 24 bezüglich der Hochachse H2 sein.

Beispielsweise kann die Gesamtlänge des Zinkenstiels 38 bezüglich der Arbeitsrichtung A2 größer oder im Wesentlichen gleich der Gesamthöhe des Zinkenstiels 38 sein. Beispielsweise kann das Schar 42 und/oder das bodenseitige Ende des Zinkenstiels 38 bezüglich der Arbeitsrichtung A2 bzw. der Längsachse L2 hinter dem Befestigungsbereich 36 und hinter der Vorspanneinrichtung 40 angeordnet sein.

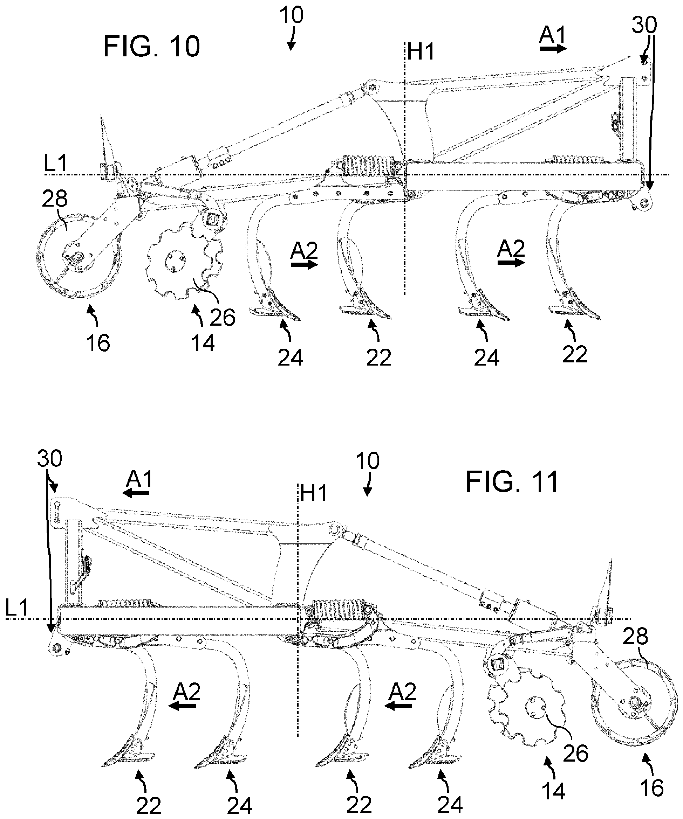

Beispielsweise kann eine Länge I der ersten Zinkeneinrichtung 24 bezüglich der Arbeitsrichtung A2 ausgehend von einem hintersten Ende des Kontaktabschnitts 51 bis zu einem hintersten Ende des Zinkenstiels 38 gemessen sein. Eine Höhe h der ersten Zinkeneinrichtung 24 kann bezüglich einer Hochachse H2 der ersten Zinkeneinrichtung 24 ausgehend von einem untersten Ende des Kontaktabschnitts 51 bis zu einem untersten Ende des Schars 42 gemessen sein. Die Länge I kann größer oder im Wesentlichen gleich der Höhe H sein (siehe Figur 11). Vorzugsweise kann die Länge I kleiner oder gleich dem Zweifachen der Höhe h sein.

Beispielsweise kann die Länge I der ersten Zinkeneinrichtung 24 größer oder im Wesentlichen gleich 700 mm, 800 mm, 900 mm oder 1000 mm sein, und/oder die Länge I der ersten Zinkeneinrichtung 24 kann kleiner 1300 mm, 1200 mm oder 1100 mm sein. Die Höhe h der ersten Zinkeneinrichtung 24 kann größer oder im Wesentlichen gleich 600 mm, 700 mm, 800 mm oder 850 mm sein, und/oder die Höhe h der ersten Zinkeneinrichtung 24 kann kleiner 1100 mm, 1000 mm oder 900 mm sein.

Beispielsweise kann die Gesamtlänge des Zinkenstiels 38 mindestens 25%, mindestens 50 %, vorzugsweise mindestens 100 %, größer als eine Gesamtlänge der Vorspanneinrichtung 40 bezüglich der Arbeitsrichtung A2 bzw. der Längsachse L2 sein.

Die Figuren 19 und 20 zeigen unterschiedliche Ansichten eines bevorzugten Ausführungsbeispiels für die zweite Zinkeneinrichtung 22, insbesondere für die zweiten Zinkeneinrichtungen 22, die jeweils zweckmäßig gemäß den Figuren 19 und 20 ausgebildet sein können.

Die zweite Zinkeneinrichtung 22 ist ähnlich zu der ersten Zinkeneinrichtung 24 ausgebildet. Allerdings ist die zweite Zinkeneinrichtung 22 bezüglich der Längsachse L2 bzw. der Arbeitsrichtung A2 vorzugsweise deutlich kürzer als die erste Zinkeneinrichtung 24.

Beispielsweise kann eine Gesamtlänge der zweiten Zinkeneinrichtung 22 bezüglich der Arbeitsrichtung A2 bzw. der Längsachse L2 kleiner sein als eine Gesamthöhe der zweiten Zinkeneinrichtung 22 bezüglich der Hochachse H2. Beispielsweise kann die Gesamtlänge des Zinkenstiels 38' bezüglich der Arbeitsrichtung A2 bzw. der Längsachse L2 kleiner als eine Gesamthöhe des Zinkenstiels 38' bezüglich der Hochachse sein. Beispielsweise kann das Schar 42 und/oder das bodenseitige Ende des Zinkenstiels 38' bezüglich der Arbeitsrichtung bzw. der Längsachse L2 hinter dem Befestigungsbereich 36 und/oder direkt unterhalb der Vorspanneinrichtung 40 angeordnet sein.

Wie der Figur 20 zu entnehmen ist, kann eine Länge I der zweiten Zinkeneinrichtung 22 gemessen bezüglich der Arbeitsrichtung A2 ausgehend von einem hintersten Ende des Kontaktabschnitts 51 bis zu einem hintersten Ende des Zinkenstiels 38 kleiner als eine Höhe h der zweiten Zinkeneinrichtung 22 gemessen bezüglich einer Hochachse H2 der zweiten Zinkeneinrichtung 22 ausgehend von einem untersten Ende des Kontaktabschnitts 51 bis zu einem untersten Ende des Schars 42 sein.

Beispielsweise kann die Länge I der zweiten Zinkeneinrichtung 22 größer oder im Wesentlichen gleich 200 mm, 300 mm, 400 mm oder 500 mm sein, und/oder die Länge I der zweiten Zinkeneinrichtung 22 kann kleiner 800 mm, 700 mm oder 600 mm sein. Die Höhe h der zweiten Zinkeneinrichtung 22 kann größer oder im Wesentlichen gleich 600 mm, 700 mm, 800 mm oder 850 mm sein, und/oder die Höhe h der zweiten Zinkeneinrichtung 22 kann kleiner 1100 mm, 1000 mm oder 900 mm sein.

Beispielsweise kann die Gesamtlänge des Zinkenstiels 38' im Wesentlichen einer Gesamtlänge der Vorspanneinrichtung 40 bezüglich der Arbeitsrichtung A2 bzw. der Längsachse L2 entsprechen oder unwesentlich größer sein oder sogar kleiner sein.

Wie bspw. ein Vergleich der Figuren 16 und 20 ergibt, kann ein Zinkenstiel 38' der zweiten Zinkeneinrichtung 22 bezüglich der Längsachse L2 bzw. der Arbeitsrichtung A2 kürzer als der Zinkenstiel 38 der ersten Zinkeneinrichtung 24 sein. Beispielsweise kann der Zinkenstiel 38' nur durch das Stielteil 52 gebildet sein. Der Zinkenstiel 38 kann durch die Stielteile 52, 54 gebildet sein. Vorzugsweise kann der Zinkenstiel 38 der ersten Zinkeneinrichtung 24 um mindestens 20%, 30 %, 50 %, 80% oder 100 % länger sein als der Zinkenstiel 38' der zweiten Zinkeneinrichtung 22.

Wie bspw. ein Vergleich der Figuren 16 und 20 ergibt, kann der mindestens eine Schwenkarm 44' der zweiten Zinkeneinrichtung 22 bezüglich der Längsachse L2 bzw. der Arbeitsrichtung A2 kürzer als der mindestens eine Schwenkarm 44 der ersten Zinkeneinrichtung 24 sein. Vorzugsweise kann der Schwenkarm 44 der ersten Zinkeneinrichtung 24 um mindestens 20%, 30 %, 50 %, 80% oder 100 % länger sein als der Schwenkarm 44' der zweiten Zinkeneinrichtung 22.

Nicht explizit in den Figuren dargestellt, aber ebenfalls möglich, können die Befestigungsbereiche 36 der Zinkeneinrichtungen 22, 24 bezüglich der Arbeitsrichtung A2 bzw. der Längsachse L2 unterschiedlich lang sein. Vorzugsweise kann der Befestigungsbereich 36 der ersten Zinkeneinrichtung 24 um mindestens 20 %, 30 %, 50 %, 80% oder 100 % länger sein als der Befestigungsbereich 36 der zweiten Zinkeneinrichtung 22 (nicht in den Figuren dargestellt).

Vorzugsweise teilen sich die Zinkeneinrichtungen 22 und 24 mehrere Gleichteile. Beispielsweise können die Stielteile 52, die Vorspanneinrichtungen 40, der als Halterung ausgeführte Befestigungsbereich 36, die Halterungskörper 48, 50 und/oder die Gelenke 56 als Gleichteile ausgeführt sein.

Es versteht sich, dass die Bodenbearbeitungsmaschine 10, insbesondere der erste und/oder zweite Querträger 32A, 32B, vorzugsweise eine Vielzahl an ersten Zinkeinrichtungen 24 wie hierin offenbart aufweisen kann (z. B. Figuren 15 bis 18) und/oder eine Vielzahl an zweiten Zinkeinrichtungen 22 wie hierin offenbart aufweisen kann (z. B. Figuren 19 und 20).

In einer nicht dargestellten Ausführungsform können am ersten Querträger 32A und/oder am zweiten Querträger 32B mehrere dritte Zinkeneinrichtungen, vorzugsweise schwenkbar, angebracht sein, wobei z. B. die mehreren dritten Zinkeneinrichtungen bezüglich der Arbeitsrichtung A1 länger sein können als die mehreren ersten Zinkeneinrichtungen 24. Ansonsten können die dritten Zinkeneinrichtungen z. B. wie die hierin offenbarten ersten Zinkeneinrichtungen 24 ausgebildet sein.

### Bezugszeichenliste

- 10: Bodenbearbeitungsmaschine
- 12: Bodenauflockerungsvorrichtung
- 14: Bodeneinebnungsvorrichtung
- 16: Bodenrückverfestigungsvorrichtung
- 18: Rahmen
- 22: zweite Zinkeneinrichtung
- 24: erste Zinkeneinrichtung
- 26: Scheibe (Scheiben-Zustreicher)
- 28: Packerwalze
- 30: 3-Punkt-Anhängevorrichtung
- 32A: zweckmäßig erster, vorzugsweise vorderer, Querträger
- 32B: zweckmäßig zweiter, vorzugsweise hinterer, Querträger
- 36: Befestigungsbereich
- 38: Zinkenstiel
- 40: Vorspanneinrichtung
- 42: Schar
- 44: Schwenkarm
- 46: Versteifungselement
- 48: Halterungskörper
- 50: Halterungskörper
- 51: Kontaktabschnitt
- 52: Stielteil
- 54: Stielteil
- 56: Gelenk
- L1: Längsachse
- L2: Längsachse
- Q1: Querachse
- Q2: Querachse
- H1: Hochachse
- H2: Hochachse
- I: Länge
- h: Höhe

## Patentansprüche

1. Landwirtschaftliche Bodenbearbeitungsmaschine (10) zur Auflockerung eines Bodens in einer Arbeitsrichtung (A1), wobei die Bodenbearbeitungsmaschine (10) aufweist:
- einen Rahmen (18), wobei der Rahmen (18) einen ersten Querträger (32A) und einen zweiten Querträger (32B) umfasst; und
- eine Bodenauflockerungsvorrichtung (12), wobei die Bodenauflockerungsvorrichtung (12) mehrere erste Zinkeneinrichtungen (24) und mehrere zweite Zinkeneinrichtung (22) umfasst;
- wobei am ersten Querträger (32A) mehrere erste Zinkeneinrichtungen (24) und mehrere zweite Zinkeneinrichtungen (22), vorzugsweise schwenkbar, angebracht sind;
- wobei am zweiten Querträger (32B) mehrere erste Zinkeneinrichtungen (24) und/oder mehrere zweite Zinkeneinrichtungen (22), vorzugsweise schwenkbar, angebracht sind,
- wobei die mehreren ersten Zinkeneinrichtungen (24) bezüglich der Arbeitsrichtung (A1) länger sind als die mehreren zweiten Zinkeneinrichtungen (22); und wobei
- die Bodenbearbeitungsmaschine (10) eine 3-Punkt-Anhängevorrichtung (30) zum Anhängen an ein Zugfahrzeug aufweist; und
- die Bodenbearbeitungsmaschine (10), vorzugsweise die Bodenauflockerungsvorrichtung (12), eine maximale Arbeitsbreite von kleiner oder gleich 6 m aufweist.

2. Bodenbearbeitungsmaschine (10) nach einem der vorherigen Ansprüche, **dadurch gekennzeichnet, dass** der erste Querträger (32A) und der zweite Querträger (32B) mit den ersten Zinkeneinrichtungen (24) und den zweiten Zinkeneinrichtungen (22) eine Bodenauflockerungsvorrichtung (12) mit zwei Querträgerreihen, aber mit zumindest drei oder zumindest vier Zinkenquerreihen bildet.

3. Bodenbearbeitungsmaschine (10) nach Anspruch 1 oder 2, **dadurch gekennzeichnet, dass** die Bodenbearbeitungsmaschine (10) ohne Stützrad und/oder ohne Fahrwerksrad ausgeführt ist.

4. Bodenbearbeitungsmaschine (10) nach einem der vorherigen Ansprüche, **dadurch gekennzeichnet, dass** die Bodenauflockerungsvorrichtung (12) mittels der ersten Zinkeneinrichtungen (24) und der zweiten Zinkeneinrichtungen (22) ausgebildet ist, um einen Strichabstand (S) von kleiner oder gleich 30cm, 29cm, 28cm, 27cm, 26cm oder 25cm zu erzeugen.

5. Bodenbearbeitungsmaschine (10) nach einem der vorherigen Ansprüche, **dadurch gekennzeichnet, dass** die Bodenauflockerungsvorrichtung (12) mittels der ersten Zinkeneinrichtungen (24) und der zweiten Zinkeneinrichtungen (22) einen Strichabstand (S) erzeugt, wobei die ersten Zinkeneinrichtungen (24) und die zweiten Zinkeneinrichtungen (22) am ersten Querträger (32A) und am zweiten Querträger (32B) mit einem zumindest doppelten Strichabstand (S) und/oder einem maximal dreifachen oder einem maximal vierfachen Strichabstand (S) voneinander beabstandet sind.

6. Bodenbearbeitungsmaschine (10) nach einem der vorherigen Ansprüche, **dadurch gekennzeichnet, dass** am ersten Querträger (32A)
- die ersten Zinkeneinrichtungen (24) und die zweiten Zinkeneinrichtungen (22) symmetrisch oder asymmetrisch verteilt angeordnet sind, und/oder
- eine Summe aus den ersten Zinkeneinrichtungen (24) und den zweiten Zinkeneinrichtungen (22) eine ungerade oder gerade Zahl bildet.

7. Bodenbearbeitungsmaschine (10) nach einem der vorherigen Ansprüche, **dadurch gekennzeichnet, dass** am zweiten Querträger (32B)
- die ersten Zinkeneinrichtungen (24) und die zweiten Zinkeneinrichtungen (22) symmetrisch oder asymmetrisch verteilt angeordnet sind, und/oder
- eine Summe aus den ersten Zinkeneinrichtungen (24) und den zweiten Zinkeneinrichtungen (22) eine ungerade oder gerade Zahl bildet.

8. Bodenbearbeitungsmaschine (10) nach einem der vorherigen Ansprüche, **dadurch gekennzeichnet, dass**
- am ersten Querträger (32A) exakt drei erste Zinkeneinrichtungen (24) und exakt drei zweite Zinkeneinrichtungen (22) angebracht sind, wobei am zweiten Querträger (32B) exakt vier erste Zinkeneinrichtungen (24) und exakt drei zweite Zinkeneinrichtungen (22) angebracht sind, oder
- am ersten Querträger (32A) exakt zwei erste Zinkeneinrichtungen (24) und exakt drei zweite Zinkeneinrichtungen (22) angebracht sind, wobei am zweiten Querträger (32B) exakt drei erste Zinkeneinrichtungen (24) und exakt drei zweite Zinkeneinrichtungen (22) angebracht sind.

9. Bodenbearbeitungsmaschine (10) nach einem der vorherigen Ansprüche, **dadurch gekennzeichnet, dass**
- der erste Querträger (32A) sich von der einen Außenseite des Rahmens (18) und/oder der Bodenauflockerungsvorrichtung (12) bis zu der anderen Außenseite des Rahmens (18) und/oder der Bodenauflockerungsvorrichtung (12) durchgängig erstreckt, und/oder
- der zweite Querträger (32B) sich von der einen Außenseite des Rahmens (18) und/oder der Bodenauflockerungsvorrichtung (12) bis zu der anderen Außenseite des Rahmens (18) und/oder der Bodenauflockerungsvorrichtung (12) durchgängig erstreckt.

10. Bodenbearbeitungsmaschine (10) nach einem der vorherigen Ansprüche, **dadurch gekennzeichnet, dass** der Rahmen (18) einen in seiner Umfangsrichtung geschlossenen Rahmen bildet.

11. Bodenbearbeitungsmaschine (10) nach einem der vorherigen Ansprüche, **dadurch gekennzeichnet, dass** am ersten Querträger (32A) eine Summe aus ersten und zweiten Zinkeneinrichtungen (24, 22) angebracht ist und am zweiten Querträger (32B) eine Summe aus ersten und zweiten Zinkeneinrichtungen (24, 22) angebracht ist und die Summe am ersten Querträger (32A) kleiner ist als die Summe am zweiten Querträger (32B), wobei vorzugsweise der erste Querträger (32A) bezüglich der Arbeitsrichtung (A1) vor dem zweiten Querträger (32B) angeordnet ist.

12. Bodenbearbeitungsmaschine (10) nach einem der vorherigen Ansprüche, **dadurch gekennzeichnet, dass** der erste Querträger (32A) und der zweite Querträger (32B) bezüglich der Arbeitsrichtung (A1) mit einem Abstand voneinander beabstandet sind und der Abstand größer ist als 500mm, 550mm, 600mm, 650mm, 700mm, 750mm oder 800mm.

13. Bodenbearbeitungsmaschine (10) nach einem der vorherigen Ansprüche, **dadurch gekennzeichnet, dass** die Bodenbearbeitungsmaschine (10), vorzugsweise die Bodenauflockerungsvorrichtung (12), eine maximale Arbeitsbreite von kleiner oder gleich 5m, 4m oder 3m aufweist.

14. Bodenbearbeitungsmaschine (10) nach einem der vorherigen Ansprüche, **dadurch gekennzeichnet, dass** am ersten Querträger (32A) und/oder am zweiten Querträger (32B) mehrere dritte Zinkeneinrichtungen, vorzugsweise schwenkbar, angebracht sind und vorzugsweise die mehreren dritten Zinkeneinrichtungen bezüglich der Arbeitsrichtung (A1) länger sind als die mehreren ersten Zinkeneinrichtungen (24).

15. Bodenbearbeitungsmaschine (10) nach einem der vorherigen Ansprüche, **dadurch gekennzeichnet, dass** die ersten Zinkeneinrichtungen (24) jeweils aufweisen:
- einen Befestigungsbereich (36) zum, insbesondere lösbaren, Anbringen an dem ersten Querträger (32A) oder dem zweiten Querträger (32B), wobei der Befestigungsbereich (36) einen Kontaktabschnitt (51) zum Anlegen an dem ersten Querträger (32A) oder dem zweiten Querträger (32B) aufweist;
- einen, vorzugsweise hakenförmigen und/oder stabförmigen, Zinkenstiel (38); und
- ein Schar (42) zum Eingreifen in den Boden, das an einem bodenseitigen Ende des Zinkenstiels (38) angeordnet ist, wobei:
- eine Länge (I) der ersten Zinkeneinrichtung (24) gemessen bezüglich der Arbeitsrichtung (A2) ausgehend von einem hintersten Ende des Kontaktabschnitts (51) bis zu einem hintersten Ende des Zinkenstiels (38) größer oder im Wesentlichen gleich einer Höhe (h) der ersten Zinkeneinrichtung (24) gemessen bezüglich einer Hochachse (H2) der ersten Zinkeneinrichtung (24) ausgehend von einem untersten Ende des Kontaktabschnitts (51) bis zu einem untersten Ende des Schars (42) ist.

16. Bodenbearbeitungsmaschine (10) nach einem der vorherigen Ansprüche, **dadurch gekennzeichnet, dass** die Bodenbearbeitungsmaschine (10) umfasst:
- eine Bodeneinebnungsvorrichtung (14) zur Einebnung des von der Bodenauflockerungsvorrichtung (12) aufgelockerten Bodens, wobei die Bodeneinebnungsvorrichtung (14) bezüglich der Arbeitsrichtung (A1) hinter der Bodenauflockerungsvorrichtung (12) angeordnet ist, und/oder
- eine Bodenrückverfestigungsvorrichtung (16), vorzugsweise aufweisend eine Packerwalze (28), zum Rückverfestigen des von der Bodeneinebnungsvorrichtung (14) eingeebneten Bodens, wobei vorzugsweise die Bodenrückverfestigungsvorrichtung (16) bezüglich der Arbeitsrichtung (A1) hinter der Bodeneinebnungsvorrichtung (14) angeordnet ist.

## Claims

1. Agricultural soil-working machine (10) for loosening soil in a working direction (A1), the soil-working machine (10) having:
- a frame (18), wherein the frame (18) comprises a first crossmember (32A) and a second crossmember (32B); and
- a soil-loosening apparatus (12), wherein the soil-loosening apparatus (12) comprises multiple first tine devices (24) and multiple second tine devices (22);
- wherein multiple first tine devices (24) and multiple second tine devices (22) are attached, preferably in a pivotable manner, to the first crossmember (32A),
- wherein multiple first tine devices (24) and/or multiple second tine devices (22) are attached, preferably in a pivotable manner, to the second crossmember (32B),
- wherein the multiple first tine devices (24) are longer than the multiple second tine devices (22) in relation to the working direction (A1) ; and wherein
- the soil-working machine (10) has a 3-point hitch (30) for attachment to a towing vehicle; and
- the soil-working machine (10), preferably the soil-loosening apparatus (12), has a maximum working width of less than or equal to 6 m.

2. Soil-working machine (10) according to one of the preceding claims, **characterized in that** the first crossmember (32A) and the second crossmember (32B) form with the first tine devices (24) and the second tine devices (22) a soil-loosening apparatus (12) with two crossmember rows but with at least three or at least four tine transverse rows.

3. Soil-working machine (10) according to Claim 1 or 2, **characterized in that** the soil-working machine (10) is designed without a support wheel and/or without a chassis wheel.

4. Soil-working machine (10) according to one of the preceding claims, **characterized in that** the soil-loosening apparatus (12) is, by means of the first tine devices (24) and the second tine devices (22), configured to produce a line spacing (S) of less than or equal to 30 cm, 29 cm, 28 cm, 27 cm, 26 cm or 25 cm.

5. Soil-working machine (10) according to one of the preceding claims, **characterized in that** the soil-loosening apparatus (12) produces a line spacing (S) by means of the first tine devices (24) and the second tine devices (22), wherein the first tine devices (24) and the second tine devices (22) on the first crossmember (32A) and on the second crossmember (32B) are spaced apart from one another by at least twice the line spacing (S) and/or by at most three times or at most four times the line spacing (S).

6. Soil-working machine (10) according to one of the preceding claims, **characterized in that**, on the first crossmember (32A),
- the first tine devices (24) and the second tine devices (22) are arranged so as to be distributed symmetrically or asymmetrically and/or
- a total number of the first tine devices (24) and the second tine devices (22) is an odd or even number.

7. Soil-working machine (10) according to one of the preceding claims, **characterized in that**, on the second crossmember (32B),
- the first tine devices (24) and the second tine devices (22) are arranged so as to be distributed symmetrically or asymmetrically and/or
- a total number of the first tine devices (24) and the second tine devices (22) is an odd or even number.

8. Soil-working machine (10) according to one of the preceding claims, **characterized in that**
- exactly three first tine devices (24) and exactly three second tine devices (22) are attached to the first crossmember (32A), wherein exactly four first tine devices (24) and exactly three second tine devices (22) are attached to the second crossmember (32B), or
- exactly two first tine devices (24) and exactly three second tine devices (22) are attached to the first crossmember (32A), wherein exactly three first tine devices (24) and exactly three second tine devices (22) are attached to the second crossmember (32B).

9. Soil-working machine (10) according to one of the preceding claims, **characterized in that**
- the first crossmember (32A) extends continuously from one outer side of the frame (18) and/or of the soil-loosening apparatus (12) to the other outer side of the frame (18) and/or of the soil-loosening apparatus (12), and/or
- the second crossmember (32B) extends continuously from one outer side of the frame (18) and/or of the soil-loosening apparatus (12) to the other outer side of the frame (18) and/or of the soil-loosening apparatus (12).

10. Soil-working machine (10) according to one of the preceding claims, **characterized in that** the frame (18) forms a closed frame in its peripheral direction.

11. Soil-working machine (10) according to one of the preceding claims, **characterized in that** a total number of first and second tine devices (24, 22) is attached to the first crossmember (32A), and a total number of first and second tine devices (24, 22) is attached to the second crossmember (32B), and the total number at the first crossmember (32A) is less than the total number at the second crossmember (32B), wherein preferably the first crossmember (32A) is arranged in front of the second crossmember (32B) in relation to the working direction (A1).

12. Soil-working machine (10) according to one of the preceding claims, **characterized in that** the first crossmember (32A) and the second crossmember (32B) are spaced apart from one another by a distance in relation to the working direction (A1), and the distance is greater than 500 mm, 550 mm, 600 mm, 650 mm, 700 mm, 750 mm or 800 mm.

13. Soil-working machine (10) according to one of the preceding claims, **characterized in that** the soil-working machine (10), preferably the soil-loosening apparatus (12), has a maximum working width of less than or equal to 5 m, 4 m or 3 m.

14. Soil-working machine (10) according to one of the preceding claims, **characterized in that** multiple third tine devices are attached, preferably in a pivotable manner, to the first crossmember (32A) and/or to the second crossmember (32B), and preferably the multiple third tine devices are longer than the multiple first tine devices (24) in relation to the working direction (A1).

15. Soil-working machine (10) according to one of the preceding claims, **characterized in that** the first tine devices (24) each have:
- a fastening region (36) for in particular releasable attachment to the first crossmember (32A) or the second crossmember (32B), wherein the fastening region (36) has a contact portion (51) for abutment against the first crossmember (32A) or the second crossmember (32B);
- a preferably hook-shaped and/or bar-shaped tine leg (38); and
- a share (42) for engagement into the soil, said share being arranged at a bottom-side end of the tine leg (38), wherein:
- a length (1) of the first tine device (24), as measured in relation to the working direction (A2), from a rearmost end of the contact portion (51) to a rearmost end of the tine leg (38) is greater than or substantially equal to a height (h) of the first tine device (24), as measured in relation to a vertical axis (H2) of the first tine device (24), from a lowermost end of the contact portion (51) to a lowermost end of the share (42).

16. Soil-working machine (10) according to one of the preceding claims, **characterized in that** soil-working machine (10) comprises:
- a soil-levelling apparatus (14) for levelling the soil loosened by the soil-loosening apparatus (12), wherein the soil-levelling apparatus (14) is arranged behind the soil-loosening apparatus (12) in relation to the working direction (A1), and/or
- a soil-reconsolidation apparatus (16), preferably having a packer roller (28), for reconsolidating the soil levelled by the soil-levelling apparatus (14), wherein preferably the soil-reconsolidation apparatus (16) is arranged behind the soil-levelling apparatus (14) in relation to the working direction (A1).

## Revendications

1. Machine agricole de travail du sol (10) pour l'ameublissement d'un sol dans un sens de travail (A1), la machine de travail du sol (10) présentant :
- un cadre (18), le cadre (18) comprenant une première traverse (32A) et une seconde traverse (32B) ; et
- un dispositif d'ameublissement du sol (12), le dispositif d'ameublissement du sol (12) comprenant plusieurs premiers équipements à dent (24) et plusieurs deuxièmes équipements à dent (22) ;
- plusieurs premiers équipements à dent (24) et plusieurs deuxièmes équipements à dent (22) étant montés, de préférence de manière pivotante, sur la première traverse (32A) ;
- plusieurs premiers équipements à dent (24) et/ou plusieurs deuxièmes équipements à dent (22) étant montés, de préférence de manière pivotante, sur la seconde traverse (32B) ;
- lesdits plusieurs premiers équipements à dent (24) étant plus longs, par rapport au sens de travail (A1), que lesdits plusieurs deuxièmes équipements à dent (22) ; et
- la machine de travail du sol (10) présentant un dispositif d'attelage à 3 points (30) pour l'attelage à un véhicule de traction ; et
- la machine de travail du sol (10), de préférence le dispositif d'ameublissement du sol (12), présentant une largeur de travail maximale inférieure ou égale à 6 m.

2. Machine de travail du sol (10) selon l'une des revendications précédentes, **caractérisée en ce que** la première traverse (32A) et la seconde traverse (32B) forment, conjointement avec les premiers équipements à dent (24) et les deuxièmes équipements à dent (22), un dispositif d'ameublissement du sol (12) présentant deux rangées de traverses, mais au moins trois ou au moins quatre rangées transversales de dents.

3. Machine de travail du sol (10) selon la revendication 1 ou 2, **caractérisée en ce que** la machine de travail du sol (10) est conçue sans roue jockey et/ou sans roue de châssis.

4. Machine de travail du sol (10) selon l'une des revendications précédentes, **caractérisée en ce que** le dispositif d'ameublissement du sol (12) est réalisé, à l'aide des premiers équipements à dent (24) et des seconds équipements à dent (22), pour l'obtention d'une distance (S) entre les lignes inférieure ou égale à 30 cm, 29 cm, 28 cm, 27 cm, 26 cm ou 25 cm.

5. Machine de travail du sol (10) selon l'une des revendications précédentes, **caractérisée en ce que** le dispositif d'ameublissement du sol (12) permet d'obtenir, à l'aide des premiers équipements à dent (24) et des deuxièmes équipements à dent (22), une certaine distance (S) entre les lignes, les premiers équipements à dent (24) et les seconds équipements à dent (22) sur la première traverse (32A) et sur la seconde traverse (32B) étant écartés les uns des autres d'au moins deux fois la distance (S) entre les lignes et/ou d'au maximum trois fois ou d'au maximum quatre fois la distance (S) entre les lignes.

6. Machine de travail du sol (10) selon l'une des revendications précédentes, **caractérisée en ce que**, sur la première traverse (32A)
- les premiers équipements à dent (24) et les deuxièmes équipements à dent (22) sont agencés de manière symétriquement ou asymétriquement répartie et/ou
- une somme des premiers équipements à dent (24) et des deuxièmes équipements à dent (22) forme un nombre impair ou pair.

7. Machine de travail du sol (10) selon l'une des revendications précédentes, **caractérisée en ce que**, sur la secondes traverse (32A)
- les premiers équipements à dent (24) et les deuxièmes équipements à dent (22) sont agencés de manière symétriquement ou asymétriquement répartie et/ou
- une somme des premiers équipements à dent (24) et des deuxièmes équipements à dent (22) forme un nombre impair ou pair.

8. Machine de travail du sol (10) selon l'une des revendications précédentes, **caractérisée en ce que**
- exactement trois premiers équipements à dent (24) et exactement trois deuxièmes équipements à dent (22) sont montés sur la première traverse (32A), exactement quatre premiers équipements à dent (24) et exactement trois deuxièmes équipements à dent (22) étant montés sur la seconde traverse (32B) ou
- exactement deux premiers équipements à dent (24) et exactement trois deuxièmes équipements à dent (22) sont montés sur la première traverse (32A), exactement trois premiers équipements à dent (24) et exactement trois deuxièmes équipements à dent (22) étant montés sur la seconde traverse (32B).

9. Machine de travail du sol (10) selon l'une des revendications précédentes, **caractérisée en ce que**
- la première traverse (32A) s'étend en continu à partir d'un côté externe du cadre (18) et/ou du dispositif d'ameublissement du sol (12) jusqu'à l'autre coté externe du cadre (18) et/ou du dispositif d'ameublissement du sol (12) et/ou
- la seconde traverse (32B) s'étend en continu à partir d'un côté externe du cadre (18) et/ou du dispositif d'ameublissement du sol (12) jusqu'à l'autre coté externe du cadre (18) et/ou du dispositif d'ameublissement du sol (12).

10. Machine de travail du sol (10) selon l'une des revendications précédentes, **caractérisée en ce que** le cadre (18) forme un cadre fermé dans sa direction périphérique.

11. Machine de travail du sol (10) selon l'une des revendications précédentes, **caractérisée en ce qu'**une certaine somme des premiers et des deuxièmes équipements à dent (24, 22) est montée sur la première traverse (32A) et une certaine somme des premiers et des deuxièmes équipements à dent (24, 22) est montée sur la seconde traverse (32B) et la somme sur la première traverse (32A) est inférieure à la somme sur la seconde traverse (32B), la première traverse (32A) étant de préférence agencée, par rapport au sens de travail (A1), devant la seconde traverse (32B).

12. Machine de travail du sol (10) selon l'une des revendications précédentes, **caractérisée en ce que** la première traverse (32A) et la seconde traverse (32B) sont écartées l'une de l'autre, par rapport au sens de travail (A1), d'une certaine distance et la distance est supérieure à 500 mm, 550 mm, 600 mm, 650 mm, 700 mm, 750 mm ou 800 mm.

13. Machine de travail du sol (10) selon l'une des revendications précédentes, **caractérisée en ce que** la machine de travail du sol (10), de préférence le dispositif d'ameublissement du sol (12), présente une largeur de travail inférieure ou égale à 5 m, 4 m ou 3 m.

14. Machine de travail du sol (10) selon l'une des revendications précédentes, **caractérisée en ce que** plusieurs troisièmes équipements à dent sont montés, de préférence de manière pivotante, sur la première traverse (32A) et/ou sur la seconde traverse (32B) et, de préférence, lesdits plusieurs troisièmes équipements à dent sont plus longs que lesdites premiers équipements à dent (24) par rapport au sens de travail (A1).

15. Machine de travail du sol (10) selon l'une des revendications précédentes, **caractérisée en ce que** lesdits premiers équipements à dent (24) présentent à chaque fois :
- une zone de fixation (36) pour un montage, en particulier amovible, sur la première traverse (32A) ou sur la seconde traverse (32B), la zone de fixation (36) présentant une section de contact (51) destinée à être appliquée contre la première traverse (32A) ou contre la seconde traverse (32B) ;
- une tige (38) de dent de préférence en forme de crochet et/ou en forme de barre ; et
- un soc (42) destiné à pénétrer dans le sol, qui est agencé au niveau d'une extrémité côté sol de la tige (38) de dent :
- une longueur (1) du premier équipement à dents (24), mesurée, par rapport au sens de travail (A2), à partir d'une extrémité arrière de la section de contact (51) jusqu'à une extrémité arrière de la tige (38) de dent, étant supérieure ou sensiblement égale à une hauteur (h) du premier équipement à dents (24), mesurée, par rapport à un axe de hauteur (H2) du premier équipement à dents (24), à partir d'une extrémité inférieure de la zone de contact (51) jusqu'à une extrémité inférieure du soc (42).

16. Machine de travail du sol (10) selon l'une des revendications précédentes, **caractérisée en ce que** la machine de travail du sol (10) comprend :
- un dispositif de nivellement du sol (14) destiné à niveler le sol ameubli par le dispositif d'ameublissement du sol (12), le dispositif de nivellement du sol (14) étant agencé, par rapport au sens de travail (A1), derrière le dispositif d'ameublissement du sol (12) et/ou
- un dispositif de consolidation du sol (16), présentant de préférence un rouleau packer (28), destiné à consolider le sol nivelé par le dispositif de nivellement du sol (14), le dispositif de consolidation du sol (16) étant agencé, par rapport au sens de travail (A1), derrière le dispositif de nivellement du sol (14).
